(19) Europäisches Patentamt
European Patent Office
Office européen des brevets

(11) **EP 4 014 021 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **20758101.8**

(22) Anmeldetag: **12.08.2020**

(51) Internationale Patentklassifikation (IPC):
***G01M 13/025*** (2019.01)

(52) Gemeinsame Patentklassifikation (CPC):
**G01M 13/025;** Y02T 10/62

(86) Internationale Anmeldenummer:
**PCT/AT2020/060298**

(87) Internationale Veröffentlichungsnummer:
**WO 2021/026578 (18.02.2021 Gazette 2021/07)**

(54) **VERFAHREN ZUM BETREIBEN EINES PRÜFSTANDS**

METHOD FOR OPERATING A TEST BENCH

PROCÉDÉ D'UTILISATION D'UN BANC D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2019 AT 507112019**

(43) Veröffentlichungstag der Anmeldung:
**22.06.2022 Patentblatt 2022/25**

(73) Patentinhaber: **AVL List GmbH
8020 Graz (AT)**

(72) Erfinder: **BIER, Maximilian
64285 Darmstadt (DE)**

(74) Vertreter: **Patentanwälte Pinter & Weiss OG
Prinz-Eugen-Straße 70
1040 Wien (AT)**

(56) Entgegenhaltungen:
**EP-A2- 2 161 560    WO-A1-2018/185286**

**Beschreibung**

Die vorliegende Erfindung betrifft ein Verfahren zum Betreiben eines Prüfstands mit einem Prüfling mit zumindest zwei drehfest verbundenen Drehmassen mit jeweils einem Massenträgheitsmoment, wobei zumindest eine Drehmasse mittels einer Belastungswelle mit einer Belastungsmaschine zum Antrieb oder zur Belastung des Prüflings verbunden wird, wobei die Belastungsmaschine von einer Belastungsmaschinenregeleinheit geregelt wird, wobei am Prüfstand Belastungen auf den Prüfling aufgebracht werden und ein inneres Prüflings-Drehmoment geschätzt wird, das zur Ermittlung einer Soll-Belastungsmaschinendrehzahl verwendet wird, die von der Belastungsmaschinenregeleinheit eingeregelt wird und wobei für die zumindest eine Belastungswelle ein in der Belastungswelle wirkendes Wellenmoment ermittelt wird. Die Erfindung betrifft weiters einen Prüfstand mit einem Prüfling und mit zumindest einer Belastungsmaschine zum Antrieb und/oder zur Belastung des Prüflings, wobei der Prüfstand dazu eingerichtet ist, auf den Prüfling wirkende Belastungen nachzubilden, wobei der Prüfling zumindest zwei Drehmassen mit jeweils einem Massenträgheitsmoment aufweist, die mittels eines Verbindungselements drehfest verbunden sind, wobei zumindest eine Drehmasse über eine Belastungswelle mit einer Belastungsmaschine verbunden ist, wobei ein Beobachter zur Schätzung eines inneren Prüflings-Drehmoments vorgesehen ist, wobei eine Prüfstandsrecheneinheit zur Ermittlung einer Soll-Belastungsmaschinendrehzahl vorgesehen ist und wobei der Prüfstand zumindest eine Belastungsmaschinenregeleinheit zur Regelung der zumindest einen Belastungsmaschine aufweist, die vorgesehen ist, die Soll-Belastungsmaschinendrehzahl einzuregeln.

Bei der Entwicklung von Antriebsaggregaten, wie z.B. Verbrennungsmotoren, Elektromotoren oder einer Kombination aus Verbrennungsmotor und Elektromotor (sogenannte Hybridantriebe), kommen seit vielen Jahren Prüfstände zum Einsatz, deren grundlegender Aufbau und Wirkungsweise hinlänglich bekannt sind. Dabei ist es seit je her eine wesentliche Anforderung an solche Prüfstände, eine möglichst genaue und reproduzierbare Nachbildung von vorgegebenen Drehzahl-/Drehmoment Profilen an der Abtriebswelle des Antriebsaggregats zu gewährleisten. Hierfür wird das Antriebsaggregat über eine Belastungswelle mit einer Belastungsmaschine (Dynamometer, Dyno) verbunden.

In der Regel wird am Prüfstand die Drehzahl über die Belastungsmaschine eingestellt und das Drehmoment über das Antriebsaggregat. Aufgrund begrenzter Verfügbarkeit von Antriebs- und Messtechnik bzw. Steuer- und Regelungseinrichtungen konnten zu Beginn vorwiegend stationäre Betriebspunkte (Drehzahl-/Drehmomentkombination) eingestellt und gemessen werden. Für viele Prüfläufe war es auch ausreichend, nur stationäre Betriebspunkte anzufahren. Durch steigende Anforderungen an Antriebsaggregate (z.B. hohe Motorleistung, geringer Verbrauch, geringer Schadstoffausstoß bei Verbrennungsmotoren) und fortschreitende Entwicklung auf den genannten technischen Gebieten, aber auch aufgrund steigender Anforderungen bzw. Vorgabe zur Prüfung von Antriebsaggregaten, wurde es möglich bzw. notwendig, an den Prüfständen nicht nur stationäre Betriebspunkte einzustellen, sondern auch dynamische Drehzahl-/Drehmomentverläufe. "Dynamisch" bedeutet hierbei insbesondere nicht nur stationäre Betriebspunkte (also ein im Wesentlichen eingeschwungener Zustand), sondern auch, vor allem auch rasche, Drehzahl- und/oder Drehmomentenänderungen. Diese Profile können z.B. gesetzlich vorgegebene Messzyklen für die Abgas-Zertifizierung von Verbrennungsmotoren sein, um Nachweise über die Einhaltung von Grenzwerten für Schadstoff-Emissionen zu erbringen. Zur Optimierung von Leistung und Verbrauch von Antriebsaggregaten kommen aber auch immer öfter real, z.B. bei der Anwendung des Antriebsaggregats als Fahrzeugantrieb, im Zuge einer Testfahrt auf der Straße oder auf einer Teststrecke mit einem Fahrzeug gemessene hoch-dynamische und nicht standardisierte Fahrprofile zur Anwendung. Diese dynamischen Profile stellen sehr hohe Anforderungen an die Regelung von Prüfständen, die nicht immer zureichend erfüllt werden können.

In der Vergangenheit wurden meist Antriebsaggregate am Prüfstand getestet, die nur eine Drehmasse hatten wie z.B. ein Verbrennungsmotor oder ein Elektromotor bzw. deren Drehmasse aus regelungstechnischer Sicht als nur eine Drehmasse aufgefasst werden kann. Die Regelung des Prüfstandes mit einem Antriebsaggregat mit einer Drehmasse ist im Stand der Technik bekannt und gut beherrschbar.

Insbesondere aufgrund der weltweit strenger werdenden Abgasgesetzgebungen wurde der Fokus der Antriebsentwicklung in letzter Zeit stark auf Hybridaggregate gerichtet, also eine Kombination mehrerer Antriebsaggregate mit jeweils einer separaten Drehmasse, vorwiegend ein Verbrennungsmotor kombiniert mit einem Elektromotor. Solche Hybridaggregate gibt es in verschiedenen bekannten Ausgestaltungen, beispielsweise als sogenannte parallele oder serielle Hybridantriebe. Ein serieller Hybrid ist z.B. ein Hybridantrieb mit sogenanntem Range-Extender. Dabei ist nur der Elektromotor zum direkten Antrieb des Fahrzeuges vorgesehen, wobei die Leistung des Elektromotors in der Regel über ein Getriebe z.B. im Falle eines Straßenfahrzeugs an die Räder des Fahrzeugs übertragen wird, um das Fahrzeug anzutreiben. Der als Range-Extender vorgesehene Verbrennungsmotor ist bei dieser Anordnung nicht direkt mit dem Antriebsstrang gekoppelt und dient dann im Wesentlichen dazu, über einen Generator einen elektrischen Energiespeicher mit Energie zu versorgen, der wiederum den Elektromotor mit Energie versorgt. Der Range-Extender verlängert damit die elektrische Reichweite des elektrischen Antriebs. Die Prüfung eines solchen seriellen Hybrids unterscheidet sich damit im Wesentlichen nicht von der herkömmlichen Anordnung, da am Prüfstand nur der Elektromotor über die Belastungswelle mit der Belastungsmaschine verbunden ist.

Bei einem parallelen Hybridantrieb übertragen der Elektromotor und der Verbrennungsmotor jeweils direkt Leistung an den Antriebsstrang. Bei parallelen Fahrzeug-Hybridantrieben unterscheidet man nach dem Einbauort des Elektromotors. Beim sogenannten P1-Aggregat ist der Elektromotor direkt mit dem Abtrieb des Verbrennungsmotors verbunden. P1-Aggregate werden in der Regel nur in Verbindung mit relativ geringen elektrischen Leistungen verwendet, z.B. als sogenannter Startergenerator, wobei kein rein elektrischer Betrieb möglich ist. Bei P2-Aggregaten ist zwischen Verbrennungsmotor und Elektromotor eine Verbindungswelle mit einer Kupplung vorgesehen und der Elektromotor ist in der Regel mit dem Getriebe verbunden. Bei dieser Anordnung kann der Verbrennungsmotor vom Elektromotor abgekoppelt werden, wodurch auch ein rein elektrischer Betrieb möglich ist. Daneben gibt es auch noch sogenannte P3- und P4-Aggregate, wobei beim P3-Aggregat der Elektromotor erst am Getriebeausgang angeordnet ist. Bei der P4-Anordnung wirken der Verbrennungsmotor und der Elektromotor jeweils auf eine eigene Antriebsachse. P1-, P3- und P4-Aggregate sind am Motor- bzw. Aggregateprüfstand regelungstechnisch relativ gut beherrschbar. Beim P1-Aggregat können die beiden direkt verbundenen Drehmassen des Verbrennungsmotors und des Elektromotors durch eine einzige gesamte Drehmasse gut angenähert werden. Bei der P3- und P4-Anordnung entspricht die Anordnung im Wesentlichen dem herkömmlichen Prüfstandsaufbau eines Powerpack- oder Antriebsstrangprüfstands. Auch hier ist die Regelung des Prüfstands im Stand der Technik gut beherrschbar.

Bekannt sind beispielsweise auch Verfahren zur Regelung des Drehmoments der Belastungswelle am Prüfstand mittels Prüflingsbeobachter. Dabei kann das Drehmoment an der Belastungswelle hochdynamisch eingeregelt werden, ohne dass ein eigener Regler für das Drehmoment an der Belastungswelle verwendet wird. Es wird lediglich ein Drehzahlregler zur Regelung der Drehzahl der Belastungswelle eingesetzt. Man spricht auch von einer sogenannten drehzahlgeführten Simulationsanbindung mit Rückführung eines inneren effektiven Prüflingsdrehmoments. Bei P2-Aggregaten ergeben sich dabei allerdings Stabilitätsprobleme aufgrund der mittels Kupplung gekoppelten Drehmassen von Verbrennungsmotor und Elektromotor, insbesondere dann, wenn die Kupplung geöffnet oder geschlossen wird und der Verbrennungsmotor vom Elektromotor ab- bzw. angekoppelt wird. Die Stabilitätsprobleme der Regelung ergeben sich aus dem Schwingungsverhalten der Kupplung, welche eine drehelastische Verbindung darstellt, deren Schwingungsverhalten im geschlossenen Zustand mit dem Schwingungsverhalten eines Zweimassenschwungrads vergleichbar ist. Im Stand der Technik gibt es derzeit keine zufriedenstellende Lösung für diese Problematik.

In einem Antriebsstrang auf einem Prüfstand können aber neben Drehmomentenerzeuger und/oder zusätzlich zu Drehmomentenerzeugern auch weitere Drehmassen, wie beispielsweise ein Zweimassenschwungrad, vorhanden sein. Auch solche Drehmassen können zu Stabilitätsproblemen der Regelung zur Durchführung eines Prüflaufs führen.

WO 2018/185286 A1 offenbart ein Verfahren zum Steuern eines Getriebeprüfstands. Dabei wird aus einem gemessenen Wellenmoment ein Eintriebsmoment für ein Getriebe geschätzt, wobei ein Beschleunigungsmoment des Getriebes berücksichtigt wird. Aus dem Eintriebsmoment wird über ein Modell eines Antriebsstrangs eine Soll-Drehzahl für eine Belastungsmaschine berechnet, die zur Regelung der Belastungsmaschine verwendet wird.

Demzufolge ist die Aufgabe der Erfindung, ein einfach anzuwendendes und gegenüber dem Stand der Technik verbessertes Verfahren zum Betreiben eines Prüflings mit mehreren Drehmassen auf einem Prüfstand bzw. einen entsprechenden Prüfstand bereitzustellen, mit dem dynamische Prüfläufe mit einer stabilen Regelung durchgeführt werden können.

Die Aufgabe wird erfindungsgemäß dadurch gelöst, dass das ermittelte Wellenmoment mit ermittelten Beschleunigungsmomenten zur Beschleunigung der zumindest zwei Drehmassen vorzeichenrichtig zu einem korrigierten inneren effektiven Prüflings-Drehmoment summiert wird und dass die Soll-Belastungsmaschinendrehzahl aus dem korrigierten inneren effektiven Prüflings-Drehmoment oder zumindest einem daraus abgeleiteten Drehmoment, einem vorgegebenen Soll-Prüflingsmoment und aus den Massenträgheitsmomenten oder simulierten Massenträgheitsmomenten der zumindest zwei Drehmassen ermittelt wird. Durch das erfindungsgemäße Verfahren kann die Stabilität der Regelung eines Prüflings mit mehreren Drehmassen am Prüfstand verbessert werden.

Vorzugsweise wird das in zumindest einer Belastungswelle wirkende Wellenmoment mittels einer Drehmomentmesseinrichtung an der Belastungswelle gemessen. Dadurch kann das Wellenmoment mit gängiger Messtechnik erfasst werden. Alternativ könnte das Wellenmoment auch aus anderen erfassten Messgrößen, wie beispielsweise Drehzahlen oder Drehmomente, geschätzt werden, beispielsweise mittels eines hinlänglich bekannten Beobachters oder eines mathematischen Modells.

Vorteilhafterweise wird das Beschleunigungsdrehmoment zumindest einer Drehmasse aus einer Drehzahl der jeweiligen Drehmasse und aus dem Massenträgheitsmoment der jeweiligen Drehmasse ermittelt, wobei die Drehzahl der zumindest einen Drehmasse vorzugsweise mittels einer Drehzahlmesseinrichtung am Prüfstand gemessen wird. Dadurch kann eine Ermittlung von Istwerten der Drehzahlen mit möglichst hoher Auflösung und geringem zeitlichen Verzug erreicht werden und zur Berechnung des Beschleunigungsdrehmoments verwendet werden.

Die gemessene Drehzahl, eine daraus berechnete Winkelbeschleunigung oder zumindest ein Beschleunigungsdrehmoment wird vorzugsweise mittels eines Filters gefiltert. Dadurch können beispielsweise hochfrequente Schwingungen aus dem Drehzahlsignal gefiltert werden, wodurch man ein gemitteltes Drehzahlsignal erhält. Insbesondere bei der Verwendung eines Verbrennungsmotors ist dies vorteilhaft, um Verbrennungsstöße zu filtern. Vorzugsweise wird als zumindest eine Drehmasse ein Drehmomenterzeuger vorgesehen, der mittels einer Prüflingsregeleinheit geregelt wird, wobei als Drehmomenterzeuger vorzugsweise ein Verbrennungsmotor verwendet wird, der von einer Verbrennungsmotor-Regelungseinheit geregelt wird oder ein Elektromotor vorgesehen wird, der von einer Elektromotor-Regelungseinheit geregelt wird. Dadurch kann das Verfahren beispielsweise für ein Hybridantriebsaggregat verwendet werden, bei dem ein Elektromotor und ein Verbrennungsmotor zusammenwirken.

Für zwei drehfest verbundene Drehmassen des Prüflings kann auch ein Zwei-Massen-Schwungrad verwendet werden und/oder die zwei Drehmassen werden mit einer Verbindungswelle, einem Riemen oder einer Kette drehfest verbunden, wodurch die Einsatzmöglichkeiten des Verfahrens erweitert werden können.

Die Soll-Belastungsmaschinendrehzahl kann ermittelt werden, indem das korrigierte innere effektive Prüflings-Drehmoment und das vorgegebene Soll-Wellenmoment vorzeichenrichtig zu einem ersten Differenzmoment summiert werden und indem das erste Differenzmoment mit dem Kehrwert einer Summe der Massenträgheitsmomente oder simulierten Massenträgheitsmomenten der zumindest zwei Drehmassen multipliziert und zeitlich integriert wird.

Um das Schwingungsverhalten im simulierten Antriebsstrang möglichst fahrzeugrealistisch darzustellen wird die Soll-Belastungsmaschinendrehzahl vorzugsweise ermittelt, indem das korrigierte innere effektive Prüflings-Drehmoment, das vorgegebene Soll-Wellenmoment und zumindest ein simuliertes Verbindungselementmoment eines die drehfeste Verbindung der zumindest zwei Drehmassen abbildenden virtuellen Verbindungselements vorzeichenrichtig zu einem zweiten Differenzmoment summiert werden und indem das zweite Differenzmoment mit dem Kehrwert des Massenträgheitsmoments oder eines simulierten Massenträgheitsmoments der mit der Belastungswelle verbundenen Drehmasse multipliziert und zeitlich integriert wird, wobei das zumindest eine simulierte Verbindungselementmoment aus dem Massenträgheitsmoment oder eines simulierten Massenträgheitsmoments der zumindest einen übrigen Drehmasse, aus der rückgeführten Soll-Belastungsmaschinendrehzahl und mechanischen Eigenschaften des virtuellen Verbindungselements ermittelt wird.

Eine weitere Verbesserung des Verfahrens wird erreicht, wenn die Soll-Belastungsmaschinendrehzahl ermittelt wird, indem das vorgegebene Soll-Wellenmoment, zumindest ein simuliertes Verbindungelementmoment eines, die drehfeste Verbindung der zumindest zwei Drehmassen abbildenden virtuellen Verbindungselements und ein ge-schätztes inneres Drehmoment der mit der Belastungswelle verbundenen Drehmasse vorzeichenrichtig zu einem dritten Differenzmoment addiert werden und indem das dritte Differenzmoment mit dem Kehrwert des Massenträgheitsmoments oder eines simulierten Massenträgheitsmoments der mit der Belastungswelle verbundenen Drehmasse multipliziert und zeitlich integriert wird, wobei das zumindest eine simulierte Verbindungselementmoment aus dem Massenträgheitsmoment oder eines simulierten Massenträgheitsmoments der zumindest einen weiteren Drehmasse, aus der rückgeführten Soll-Belastungsmaschinendrehzahl, aus mechanischen Eigenschaften des zumindest einen virtuellen Verbindungselements und aus einem geschätzten inneren Drehmoment der zumindest einen weiteren Drehmasse ermittelt wird, das aus einer vorzeichenrichtigen Summe des korrigierten inneren effektiven Prüflings-Drehmoments und eines geschätzten inneren Drehmoments der mit der Belastungswelle verbundenen Drehmasse gebildet wird. Durch Verwendung einer virtuellen Verbindungswelle kann das Verfahren besser an den realen Prüfling, beispielsweise als Teil eines Fahrzeugs, angepasst werden.

Um das Verfahren noch weiter zu verbessern ist es vorteilhaft die Soll-Belastungsmaschinendrehzahl zu ermitteln, indem das vorgegebene Soll-Wellenmoment, zumindest ein simuliertes Verbindungselementmoment eines, die drehfeste Verbindung der zumindest zwei Drehmassen abbildenden virtuellen Verbindungselements und ein schwingendes geschätztes inneres Drehmoment der mit der Belastungswelle verbundenen Drehmasse vorzeichenrichtig zu einem vierten Differenzmoment addiert werden und dass das vierte Differenzmoment mit dem Kehrwert des Massenträgheitsmoments oder eines simulierten Massenträgheitsmoments der mit der Belastungswelle verbundenen Drehmasse multipliziert und zeitlich integriert wird, wobei das zumindest eine simulierte Verbindungselementmoment aus dem Massenträgheitsmoment oder einem simulierten Massenträgheitsmoment der zumindest einen weiteren Drehmasse, aus der rückgeführten Soll-Belastungsmaschinendrehzahl, aus mechanischen Eigenschaften des zumindest einen virtuellen Verbindungselements und aus einem geschätzten mittleren inneren Drehmoment der zumindest einen weiteren Drehmasse ermittelt wird, das durch eine gefilterte vorzeichenrichtige Summe des korrigierten inneren effektiven Prüflings-Drehmoments und des geschätzten inneren Drehmoments der mit der Belastungswelle verbundenen Drehmasse gebildet wird, wobei das schwingende geschätzte innere Drehmoment der mit der Belastungswelle verbundenen Drehmasse aus einer vorzeichenrichtigen Summe des korrigierten inneren effektiven Prüflings-Drehmoments und des geschätzten mittleren inneren Drehmoments der zumindest einen übrigen Drehmasse gebildet wird. Damit kann ein fahrzeugrealistisches Schwingungsverhalten des Prüflings noch besser am Prüfstand und in einer u.U. angeschlossenen Antriebsstrang- und Fahrzeugsimulation nachgebildet werden.

Das simulierte Verbindungselementmoment wird vorzugsweise ermittelt, indem das zurückgeführte simulierte Verbindungselementmoment oder eine vorzeichenrichtige Summe aus dem zurückgeführten simulierten Verbindungselementmoment und dem geschätzten inneren Drehmoment oder dem geschätzten mittleren inneren Drehmoment der zumindest einen übrigen Drehmasse mit dem Kehrwert des Massenträgheitsmoments oder eines simulierten Massenträgheitsmoments der zumindest einen übrigen Drehmasse multipliziert, zeitlich integriert, vorzeichenrichtig mit der zurückgeführten Soll-Belastungsmaschinendrehzahl summiert und mit den mechanischen Eigenschaften des zumindest einen virtuellen Verbindungselements multipliziert wird.

Zur möglichst einfachen Simulation des realen Verbindungselements werden als mechanische Eigenschaften des virtuellen Verbindungselements bevorzugt eine Federsteifigkeit und ein Dämpfungskoeffizient verwendet werden.

Weiters wird die Aufgabe mit einem eingangs genannten Prüfstand erfindungsgemäß dadurch gelöst, dass der Beobachter dazu eingerichtet ist, ein am Prüfstand ermitteltes, in der zumindest einen Belastungswelle wirkendes Wellenmoment mit ermittelten Beschleunigungsmomenten zur Beschleunigung der zumindest zwei Drehmassen vorzeichenrichtig zu einem korrigierten inneren effektiven Prüflings-Drehmoment zu summieren und dass die Prüfstandsrecheneinheit dazu eingerichtet ist, die Soll-Belastungsmaschinendrehzahl aus dem korrigierten inneren effektiven Prüflings-Drehmoment oder einem daraus abgeleiteten Drehmoment, einem vorgegebenen Soll-Wellenmoment und aus den Massenträgheitsmomenten oder simulierten Massenträgheitsmomenten der zumindest zwei Drehmassen zu ermitteln.

Günstigerweise ist dabei der Beobachter dazu eingerichtet, das Beschleunigungsmoment zumindest einer Drehmasse aus einer Drehzahl der jeweiligen Drehmasse und aus dem Massenträgheitsmoment der jeweiligen Drehmasse zu ermitteln.

In einer Variante ist am Prüfstand zumindest eine Drehzahlmesseinrichtung zur Messung der Drehzahl zumindest einer Drehmasse vorgesehen.

In einer weiteren Variante ist am Prüfstand zumindest ein Filter zum Filtern der gemessenen Drehzahl einer daraus berechneten Winkelbeschleunigung oder zumindest eines Beschleunigungsmoments vorgesehen.

Vorzugsweise ist zumindest eine Drehmasse des Prüflings ein Drehmomenterzeuger und am Prüfstand ist eine Prüflingsregeleinheit zur Regelung des zumindest einen Drehmomenterzeugers vorgesehen.

Gegebenenfalls ist als Drehmomenterzeuger ein Verbrennungsmotor vorgesehen, wobei die Prüflingsregeleinheit eine Verbrennungsmotor-Regelungseinheit zur Regelung des Verbrennungsmotors aufweist, oder es ist als Drehmomenterzeuger ein Elektromotor vorgesehen, wobei die Prüflingsregeleinheit eine Elektromotor-Regelungseinheit zur Regelung des Elektromotors aufweist.

In einer Variante ist für zwei drehfest verbundene Drehmassen des Prüflings ein Zwei-Massen-Schwungrad vorgesehen. Gegebenenfalls ist als Verbindungselement zur drehfesten Verbindung zweier Drehmassen eine Verbindungswelle, ein Riemen oder eine Kette vorgesehen. In einer Variante ist am Prüfstand zumindest zwischen zwei Drehmassen zumindest eine Kupplung zum Entkoppeln der zumindest zwei Drehmassen vorgesehen.

Günstigerweise ist die Prüfstandsrecheneinheit dazu eingerichtet, die drehfeste Verbindung zweier Drehmassen, insbesondere das Verbindungselement durch ein virtuelles Verbindungselement zu simulieren.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt

Fig.1 einen Aufbau eines Prüfstandes mit einem Prüfling,

Fig.2 die im Stand der Technik bekannte Funktion eines Beobachters und einer Prüfstandsrecheneinheit,

Fig.3 die Funktion eines Beobachters und einer Prüfstandsrecheneinheit einer ersten Ausführungsform,

Fig.4 die Funktion eines Beobachters und einer Prüfstandsrecheneinheit einer zweiten Ausführungsform,

Fig.5 die Funktion eines Beobachters und einer Prüfstandsrecheneinheit einer dritten Ausführungsform,

Fig.6 die Funktion eines Beobachters und einer Prüfstandsrecheneinheit einer vierten Ausführungsform.

Fig.7 die Funktion eines Beobachters und einer Prüfstandsrecheneinheit der zweiten Ausführungsform bei Verwendung eines Prüflings mit drei Drehmassen

Fig.8 die Funktion eines Beobachters und einer Prüfstandsrecheneinheit der dritten Ausführungsform bei Verwendung eines Prüflings mit drei Drehmassen.

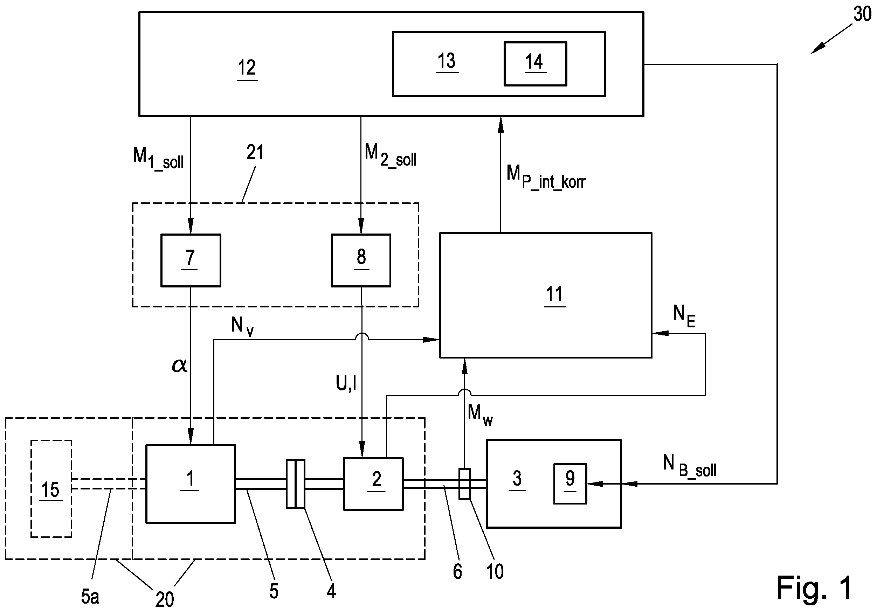

In Fig.1 ist ein grundsätzlich bekannter Aufbau eines Prüfstandes 30 mit einem Prüfling 20 in schematisch dargestellt. Der Prüfling 20 weist zwei Drehmassen 1, 2 auf, die mittels eines Verbindungselements 5, hier in Form einer Verbindungswelle, drehfest verbunden sind. Die Erfindung wird nachfolgend in nicht einschränkender Weise anhand eines P2-Aggregats als Prüfling 20 beschrieben. Als erste Drehmasse 1 ist hier ein Drehmomenterzeuger, insbesondere ein Verbrennungsmotor, vorgesehen und als zweite Drehmasse 2 ist ebenfalls ein Drehmomenterzeuger vorgesehen, hier ein Elektromotor. Erfindungsgemäß ist zumindest eine der (hier zwei) Drehmassen 1, 2 mittels einer Belastungswelle 6 mit einer Belastungsmaschine 3 zum Antrieb oder zur Belastung des Prüflings 20 verbunden. Im dargestellten Beispiel ist dies die zweite Drehmasse 2 bzw. der Elektromotor.

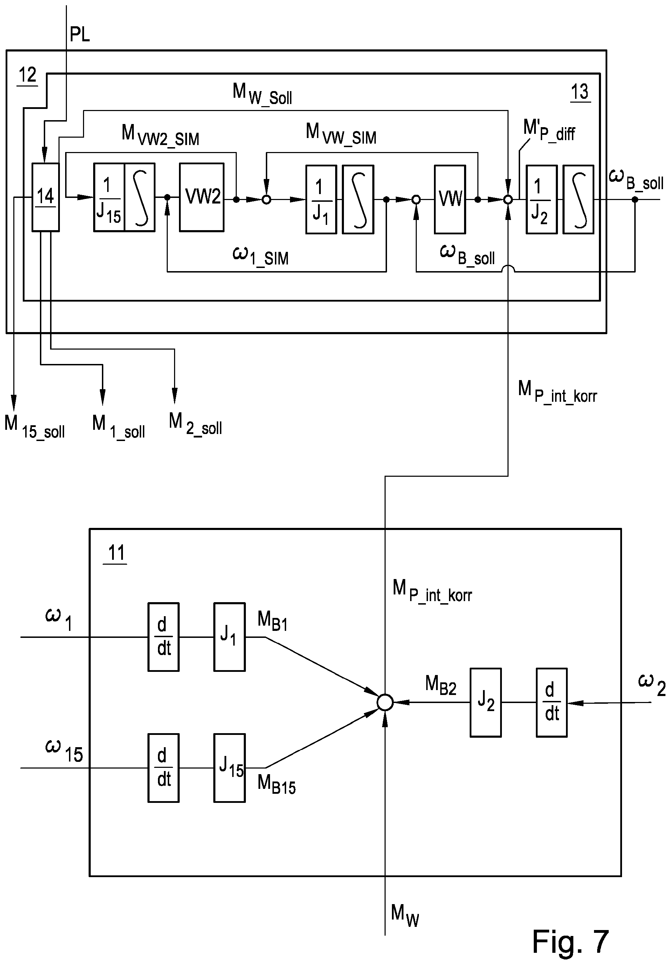

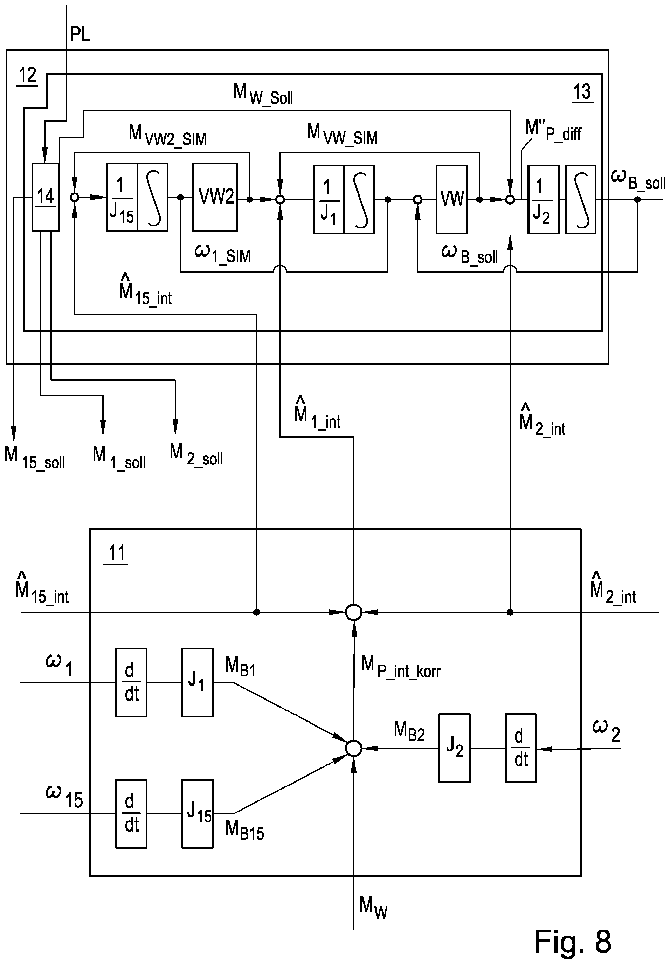

Anstelle eines P2-Aggregats kommen natürlich noch andere Konfigurationen des Prüflings 20 in Frage, wobei der Prüfling 20 zumindest zwei Drehmassen aufweist. Beispielsweise könnten aber natürlich auch mehr als zwei Drehmassen 1, 2 verwendet werden, die jeweils über ein Verbindungselement 5 drehfest verbunden sind. Die Drehmassen 1, 2 müssen auch nicht zwingend Drehmomenterzeuger sein, so wie im Ausführungsbeispiel, sondern eine Drehmasse, 1, 2 könnte auch eine passive Drehmasse sein, z.B. ein Zweimassenschwungrad oder ein Getriebe. Beispielsweise könnte an die erste Drehmasse 1 auch durch ein zweites Verbindungselement 5a mit einer dritten Drehmasse 15 verbunden sein, wie in Fig.1 gestrichelt angedeutet ist. Für das erfindungsgemäße Verfahren ändert sich dadurch aber nichts. Der Einfachheit halber wird die Erfindung deshalb nachfolgend hauptsächlich anhand eines Prüflings 20 mit zwei drehfest verbundenen Drehmassen 1, 2 beschrieben. Der Vollständigkeit halber ist in Fig.7 und Fig.8 aber auch eine Ausführungsform mit drei Drehmassen gezeigt.

Das Verbindungselement 5 dient zur Drehmomentübertragung zwischen den Drehmassen 1, 2, hier zwischen dem Verbrennungsmotor und dem Elektromotor und ist hier als Verbindungswelle ausgeführt. Natürlich wären aber auch andere Ausgestaltungen des Verbindungselements 5 denkbar, die zur Drehmomentübertragung geeignet sind, wie z.B. ein Riemen, eine Kette, etc. Der Elektromotor (Drehmasse 2) ist wiederum über die Belastungswelle 6 mit der Belastungsmaschine 3 verbunden. An der Verbindungswelle 5 zwischen der ersten Drehmasse 1 (Verbrennungsmotor) und der zweite Drehmasse 2 (Elektromotor) ist hier eine Kupplung 4 vorgesehen, mit der der Verbrennungsmotor vom Elektromotor ab- und ankoppelbar ist. Die Kupplung 4 ist aber nur optional und für das gegenständliche Verfahren nicht notwendig.

Der Prüfstand 30 umfasst eine Prüfstandsrecheneinheit 12 bzw. ist mit einer solchen verbunden. Je nach Ausführung des Prüfstands 30 weist die Prüfstandsrecheneinheit 12 zumindest eine oder mehrere der folgenden Komponenten in einer gemeinsamen oder verschiedenen Hardware-Einheiten auf: Automatisierungseinheit, Regelungssystem für Prüfstand und/oder einzelne Komponenten des Prüfstands, Prüflingsregelungseinheit (z.B. für Verbrennungsmotor-Regelungseinheit, Elektromotor-Regelungseinheit), Simulationssystem, Motorsteuereinheit für Verbrennungs-, Elektrooder Hybridmotor.

Dabei sind auch Varianten möglich, wo z.B. das Regelungssystem als Teil der Maschinenregelung für die Belastungsmaschine 3 ausgeführt ist, so dass Drehzahlregelung und gegebenenfalls andere Funktionen im Umrichter der Belastungsmaschine 3 durchgeführt werden. Während ein Automatisierungssystem im Allgemeinen die Abläufe am Prüfstand (z.B. Prüfläufe) automatisiert, Messgeräte einbindet, Messdaten erfasst oder Messungen synchronisiert, kann in Varianten auch eine Regelungseinheit in eine Automatisierungseinheit integriert werden.

Auch das Simulationssystem kann eigenständig in der Prüfstandsrecheneinheit 12, integriert in ein Regelungs- oder Automatisierungssystem ausgeführt werden.

In den nachfolgend beschriebenen Ausführungsbeispielen wird jeweils die umgesetzte Konstellation beschrieben.

Vorliegend sind zur Regelung des Prüfstands 30 eine Prüfstandsrecheneinheit 12 zur Vorgabe von Sollwerten der Regelung und eine Belastungsmaschinenregeleinheit 9 zur Regelung der Belastungsmaschine 3 vorgesehen. Die Prüfstandsrecheneinheit 12 muss aber nicht zwingend Teil des Prüfstandes 30 sein, sondern könnte auch eine externe oder zusätzliche Recheneinheit mit entsprechender Software sein. Während die Belastungsmaschinenregeleinheit 9 im vorliegenden Ausführungsbeispiel als separate Komponente beschrieben ist, kann sie in anderen Konstellationen auch Teil der Prüfstandsrecheneinheit 12 sein oder um eine solche ergänzt werden, welche wiederum weiters eine Prüfstandsautomatisierungseinheit aufweisen kann. Wenn der Prüfling 20 so wie im gezeigten Beispiel einen oder mehrere Drehmomenterzeuger aufweist, ist am Prüfstand 30 auch eine Prüflingsregeleinheit 21 zur Regelung des oder der Drehmomenterzeuger/s vorgesehen. Im dargestellten Beispiel weist die Prüflingsregeleinheit 21 beispielsweise eine Verbrennungsmotor-Regelungseinheit 7 zur Regelung des Verbrennungsmotors und eine Elektromotor-Regelungseinheit 8 zur Regelung des Elektromotors 2 auf. Wenn, wie gestrichelt angedeutet, ein weiterer Drehmomenterzeuger als dritte Drehmasse 15 vorgesehen wäre, kann eine (nicht dargestellte) weitere Regelungseinheit vorgesehen sein. Natürlich könnte aber auch nur eine einzige gemeinsame Prüflingsregelungseinheit 21 für mehrere Drehmomenterzeuger vorgesehen sein oder die Prüflingsregelungseinheiten 21 um prüfstandsbezogene Regelungseinheiten ergänzt werden. Die einzelnen Regelungseinheiten könnten im jeweiligen Drehmomenterzeuger integriert sein oder so wie dargestellt als eigene Einheiten ausgeführt sein oder auch in der Prüfstandsrecheneinheit 12 integriert sein. Die Belastungsmaschinenregeleinheit 9 ist im dargestellten Beispiel in der Belastungsmaschine 3 integriert, könnte aber ebenfalls außerhalb der Belastungsmaschine 3 als eigene Einheit vorgesehen werden oder auch in der Prüfstandsrecheneinheit 12 bzw. deren Prüfstandsautomatisierungseinheit integriert sein. Die Prüflingsregelungseinheit 21, bzw. die Verbrennungsmotor-Regelungseinheit 7 und die Elektromotor-Regelungseinheit 8, sowie die Belastungsmaschinenregeleinheit 9 können in Form von geeigneter Hardware und/oder Software implementiert sein.

Ebenso könnte auch eine weitere Belastungsmaschine mit einer der weiteren Drehmassen, verbunden sein. Diese Belastungsmaschine könnte dann beispielsweise am Prüfstand 30 einen Drehmomenterzeuger ersetzen. Für die Regelung dieser weiteren Belastungsmaschine kann dann wiederum eine Belastungsmaschinenregeleinheit vorgesehen sein, für die dasselbe wie für die Belastungsmaschinenregeleinheit 9 gilt.

Die erste Drehmasse 1 (Verbrennungsmotor) und die zweite Drehmasse 2 (Elektromotor) können jeweils eine geeignete, nicht dargestellte Drehzahlmesseinrichtung zur Messung der Drehzahlen $N_i$ (oder Winkelgeschwindigkeiten $\omega_i$) der jeweiligen Drehmasse 1, 2 aufweisen und die Belastungsmaschine 3 kann ebenfalls eine Drehzahlmesseinrichtung zur Messung der Belastungsmaschinendrehzahl $N_B$ (oder Belastungsmaschinenwinkelgeschwindigkeit $\omega_B$) aufweisen. An der Belastungswelle 6 kann eine geeignete Drehmomentmesseinrichtung 10 zur Messung des Wellenmoments Mw angeordnet sein. Statt mit einer Drehmomentmesseinrichtung 10 könnte das in der Belastungswelle 6 wirkende Wellenmoment Mw aber beispielsweise auch aus einem an der Belastungsmaschine 3 ermittelten Drehmoment und der Belastungsmaschinendrehzahl $N_B$ oder aus der Drehzahlen Ni der Drehmasse 2, der Belastungsmaschinendrehzahl $N_B$ sowie den Eigenschaften der Belastungswelle 6 geschätzt werden. Als Belastungsmaschine 3 werden üblicherweise elektrische Maschinen, wie beispielsweise Gleichstrommaschinen, Asynchronmaschinen oder Drehstrom-Synchronmaschinen verwendet, welche mit der Belastungswelle 6 verbunden sind.

Von der Prüfstandsrecheneinheit 12 bzw. deren Prüfstandsautomatisierungseinheit werden Sollwerte der Regelung an die einzelnen Regelungseinheiten 21 (7, 8), 9 übermittelt, in welchen mittels geeigneten Reglern Stellwerte berechnet werden. Beispielsweise kann für den Verbrennungsmotor ein Soll-Drehmoment $M_{1\_soll}$ vorgegeben werden, aus dem die Prüflingsregelungseinheit 21 (hier die Verbrennungsmotor-Regelungseinheit 7) eine Stellgröße, beispielsweise eine Fahrpedalstellung $\alpha$ berechnet. Analog kann für den Elektromotor ein Soll-Drehmoment $M_{2\_soll}$ vorgegeben werden, aus dem die Prüflingsregelungseinheit 21 (hier die Elektromotor-Regelungseinheit 8) eine geeignete Stellgröße, wie z.B. einen Strom I und/oder eine Spannung U berechnet. Weiters wird in der Prüfstandsrecheneinheit 12 eine Soll-Belastungsmaschinendrehzahl $N_{B\_soll}$ berechnet, aus der die Belastungsmaschinenregeleinheit 9 ebenfalls eine entsprechende Stellgröße, beispielsweise einen Strom oder eine Spannung, berechnet. Das Soll-Drehmoment $M_{1\_soll}$ des Verbrennungsmotors (Drehmasse 1) und das Soll-Drehmoment $M_{2\_soll}$ des Elektromotors (Drehmasse 2) werden üblicherweise durch einen gewünschten Prüflauf PL vorgegeben, der vom Prüfling 20 durchgeführt werden soll. Für andere Drehmomenterzeuger können natürlich auch andere Sollwerte vorgegeben werden und auch andere Stellwerte berechnet werden.

Die Stellgrößen werden dann am Prüfstand 30 jeweils mittels entsprechender Aktuatoren eingestellt. Für einen Verbrennungsmotor kann beispielsweise eine Motorsteuereinheit vorgesehen sein, die aus der Fahrpedalstellung $\alpha$ und einem aktuellen Betriebszustand geeignete Steuergrößen für den Verbrennungsmotor ermittelt, beispielsweise eine Einspritzmenge, ein Einspritzzeitpunkt, etc. Ein solcher Prüflauf PL kann bekanntermaßen ein bestimmter gemessener Drehzahl-/Drehmoment-Verlauf eines zuvor erfolgten Fahrversuchs sein, aus anderen Quellen stammen oder ein fiktiver Prüflauf PL sein. Im dargestellten Beispiel ist in der Prüfstandsrecheneinheit 12 eine Simulationseinheit 13 integriert, welche die Sollwerte eines entsprechenden vorgegebenen Prüflaufs PL für die Regelung des Prüfstands 30, also für den Prüfling 20 und die Belastungsmaschine 3, zur Verfügung stellt. Die Simulationseinheit 13 simuliert beispielsweise mit einem Simulationsmodell 14 eine Fahrt eines bestimmten Fahrzeugs entlang einer bestimmten Fahrstrecke mit einem bestimmen Fahrer, wofür auch bekanntermaßen zusammenwirkende Teilmodelle, wie ein Straßenmodell, ein Fahrermodell, ein Streckenmodell, ein Reifenmodell, usw., vorgesehen sein können. Die Simulation kann dabei auch auf dem Prüfstand 30 gemessene Istwerte, beispielsweise Drehzahlen und/oder Drehmomente des Prüflings 20 und/oder der Belastungsmaschine 3 verarbeiten. Natürlich muss die Simulationseinheit 13 aber nicht als separate physische Einheit vorgesehen sein, sondern diese könnte beispielsweise auch in Form von Software in der Prüfstandsrecheneinheit 12 integriert sein. Wenn die Sollwerte aus anderen Quellen stammen, könnte auf die Simulationseinheit 13 natürlich auch verzichtet werden.

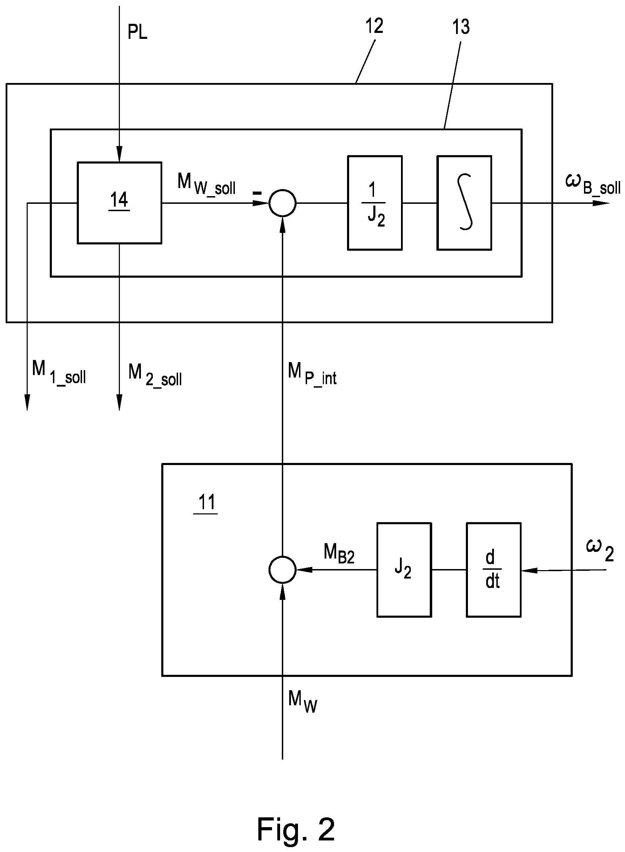

Im Rahmen der Erfindung verarbeitet die Prüfstandsrecheneinheit 12 ein Drehmoment des Prüflings 20, das aber nicht oder nur schwer direkt messbar ist. Deshalb kommt ein Beobachter 11 zum Einsatz, der das benötigte Drehmoment aus vorhandenen Messgrößen schätzt, wie in Fig.2 dargestellt ist. Für den Beobachter 11 wird die Momentensumme um den Elektromotor (zweite Drehmasse 2), der über die Belastungswelle 6 mit der Belastungsmaschine 3 verbunden ist, angesetzt. Das im Beobachter 11 geschätzte Drehmoment ist dann die Momentensumme des gemessenen (oder anderweitig ermittelten) Wellenmoments Mw an der Belastungswelle 6 und des zur Beschleunigung der zweiten Drehmasse 2 (des Elektromotors) erforderlichen Beschleunigungsmoments $M_{B2}$, das sich (vorzugsweise) aus der gemessenen Drehzahl $N_2$ (bzw. Winkelgeschwindigkeit $\omega_2$) der zweiten Drehmasse 2 (Elektromotor) und deren

Massenträgheitsmoment $J_2$ ergibt.

Der Beobachter 11 schätzt damit bei offener Kupplung 4 (wenn eine Kupplung 4 vorgesehen ist) ein inneres Prüflingsdrehmoment $M_{P\_int}$ als das an der Abtriebswelle des Elektromotors (zweite Drehmasse 2) wirkende innere Drehmoment des Elektromotors und bei geschlossener Kupplung 4 eine Summe aus dem inneren Drehmoment des Elektromotors und dem in der Kupplung 4 übertragenen Moment (von der ersten Drehmasse 1, hier vom Verbrennungsmotor ). Aus der Differenz zwischen einem hier in der Simulationseinheit 13 ermittelten Soll-Prüflingsmoment $M_{W\_soll}$ und dem im Beobachter 11 geschätzten und rückgeführten inneren Prüflingsdrehmoment $M_{P\_int}$ des Prüflings 20 wird mit dem Massenträgheitsmoment $J_2$ des Elektromotors die einzuregelnde Drehzahl $N_B$ der Belastungsmaschine 3 (als Sollwert $\omega_{B\_soll}$ für die Belastungsmaschine 3) ermittelt. Hierbei wurde festgestellt, dass mit diesem Ansatz im geregelten System Instabilität bei gekoppelten Drehmassen 1, 2 auftreten kann, z.B. bei geschlossener Kupplung 4 oder mehreren verbundenen Drehmassen.

Erfindungsgemäß ist der Beobachter 11 daher zur Ermittlung eines korrigierten inneren effektiven Prüflings-Drehmoments $M_{P\_int\_korr}$ des Prüflings 20 vorgesehen, um Stabilitätsprobleme der Regelung, insbesondere bei geschlossener Kupplung 4 oder in anderer Weise drehfest verbundenen Drehmassen 1, 2, zu beheben. Das korrigierte innere effektive Prüflings-Drehmoment $M_{P\_int\_korr}$ wird vom Beobachter 11 an die Prüfstandsrecheneinheit 12, gegebenenfalls an deren Prüfstandsautomatisierungseinheit und/oder die Simulationseinheit 13 (falls der Prüflauf simuliert wird), übermittelt, um den Sollwert ($\omega_{B\_soll}$ der Belastungsmaschine 3 zu ermitteln. Der Beobachter 11 kann ebenfalls wieder als geeignete Hardware und/oder Software ausgeführt sein. Der Beobachter 11 könnte natürlich ebenfalls z.B. in der Prüfstandsrecheneinheit 12 oder der Simulationseinheit 13 oder anderen in der Prüfstandsrecheneinheit 12 realisierten Komponenten integriert sein. Die grundlegende Funktion eines solchen Beobachters 11 ist prinzipiell bekannt und es wird nachfolgend nur auf die Besonderheiten in Zusammenhang mit dem erfindungsgemäßen Verfahren eingegangen.

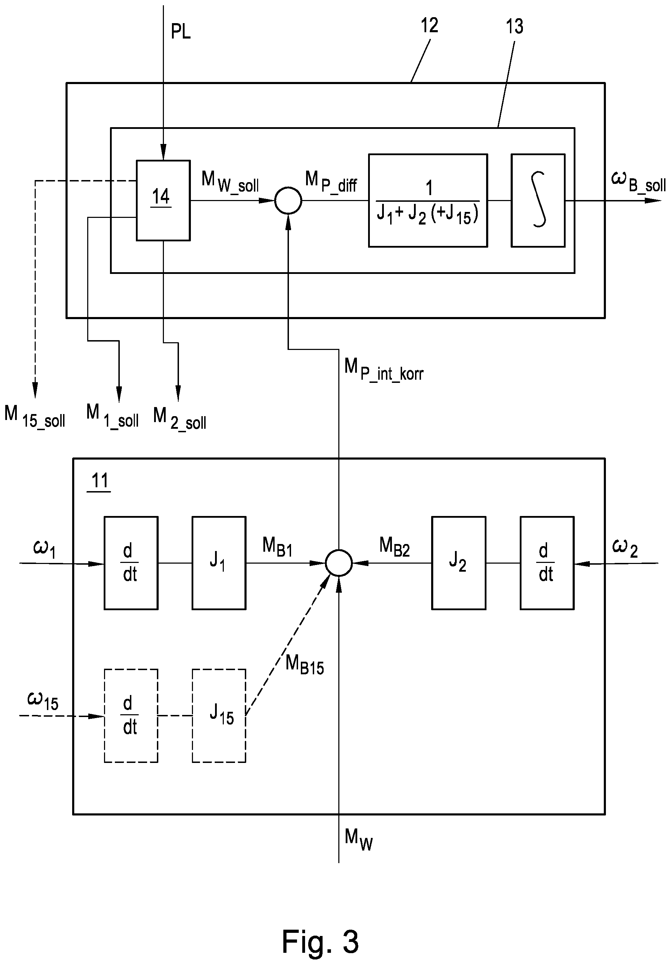

In Fig.3 ist das Zusammenwirken der Prüfstandsrecheneinheit 12 und des Beobachters 11 gemäß einer ersten Ausgestaltung des erfindungsgemäßen Verfahrens im Detail dargestellt. Neben dem Soll-Drehmoment $M_{1\_soll}$ des Verbrennungsmotors (als erste Drehmasse 1 bzw. Drehmomenterzeuger) und dem Soll-Drehmoment $M_{2\_soll}$ des Elektromotors (als zweite Drehmasse 2 bzw. Drehmomenterzeuger) wird von der Simulationseinheit 13 ein Soll-Prüflingsmoment $M_{W\_soll}$ ermittelt, z.B. ein Sollwert für das Drehmoment an der Belastungswelle 6. Dieses Soll-Prüflingsmoment $M_{W\_soll}$ muss aber nicht zwingend in der Simulationseinheit 13 ermittelt werden, sondern kann z.B. auch anderweitig ermittelt oder vorgegeben werden. Das Soll-Prüflingsmoment $M_{W\_soll}$ muss auch nicht zwingend das Soll-Wellenmoment an der Belastungswelle 6 sein, sondern könnte z.B. auch ein anderes auf die Drehmasse 2 wirkendes äußeres Moment sein, z.B. das Moment eines am Prüfstand 30 nicht aufgebauten Elektromotors oder eines Drehmomenten-Wandlers. Weiters könnten durch das Soll-Prüflingsmoment $M_{W\_soll}$ beispielsweise auch noch andere Momente berücksichtigt werden, die nicht real am Prüfstand 30 auf die Drehmasse 2 wirken, wie beispielsweise ein Reibungsmoment einer nicht real aufgebauten Komponente.

Aus der Differenz des Soll-Prüflingsmoments $M_{W\_soll}$ und des korrigierten inneren effektiven Prüflings-Drehmoments $M_{P\_int\_korr}$ des Beobachters 11, einem sogenannten Differenzmoment $M_{P\_diff}$, das am Elektromotor wirkt, wird wieder der Sollwert $\omega_{B\_soll}$ der Belastungsmaschine 3 ermittelt. Die Soll-Belastungsmaschinendrehzahl $N_{B\_soll}$ kann gemäß nachstehender Formel ermittelt werden, indem das Differenzmoment $M_{P\_diff}$ mit dem Kehrwert der Summe der Massenträgheitsmomente $J_i$ der Drehmassen 1, 2 des Prüflings 20 multipliziert und das Ergebnis zeitlich integriert wird. Bei Verwendung eines Verbrennungsmotors als erster Drehmasse 1 bzw. Drehmomenterzeuger und eines Elektromotors als zweiter Drehmasse 2 bzw. Drehmomenterzeuger (so wie in Fig.1 dargestellt) entsprechen die Massenträgheitsmomente $J_i$ einem Massenträgheitsmoment $J_V$ des Verbrennungsmotors und einem Massenträgheitsmoment $J_E$ des Elektromotors.

$$\omega_{B\_SOLL} = \int \frac{M_{P\_DIFF}}{\sum J_i} dt \; ; \; \omega = 2\pi N$$

Die Soll-Belastungsmaschinendrehzahl $N_{B\_soll}$ (und im Weiteren alle anderen Drehzahlen) kann über die bekannte Beziehung $\omega = 2\pi N$ aus der Soll-Belastungsmaschinenwinkelgeschwindigkeit $\omega_{B\_soll}$ ermittelt werden. Da die Beziehung zwischen Drehzahl N und Winkelgeschwindigkeit $\omega$ bekannt ist, werden Drehzahlen $N_i$ und Winkelgeschwindigkeiten $\omega_i$ nachfolgend synonym verwendet.

Im unteren Block in Fig.3 ist der Beobachter 11 zur Ermittlung des korrigierten inneren effektiven Prüflings-Drehmoments $M_{P\_int\_korr}$ dargestellt. Dem Beobachter 11 wird das, hier über die Drehmomentmesseinrichtung 10 an der Belastungswelle 6 gemessene Wellenmoment Mw zugeführt. Weiters werden dem Beobachter 11 die gemessenen Winkelgeschwindigkeiten $\omega_i$ (bzw. Drehzahlen $N_i$) der Drehmassen 1, 2 zugeführt, z.B. eine Verbrennungsmotor-Winkelgeschwindigkeit $\omega_V$ (bzw. Verbrennungsmotordrehzahl $N_V$) und eine Elektromotor-Winkelgeschwindigkeit $\omega_E$ bzw. (Elektromotordrehzahl $N_E$). Die Drehzahlen $N_i$ werden vorzugsweise mittels geeigneten Messeinrichtungen am Prüfstand 30 ermittelt, beispielsweise durch direkte Messung an der jeweiligen Drehmasse 1,2 oder durch Messung an einer benachbarten Drehmasse (bei ausreichend hoher Steifigkeit der drehfesten Verbindung). Die Drehzahlen Ni könnten aber beispielsweise auch direkt von einer Prüflingsregeleinheit 21 zur Verfügung gestellt werden, z.B. von der Verbrennungsmotor-Regelungseinheit 7 und der Elektromotor-Regelungseinheit 8. Das korrigierte innere effektive Prüflings-Drehmoment $M_{P\_int\_korr}$ entspricht der Summe der von den Drehmomenterzeugern erzeugten inneren Drehmomenten $M_{i\_int}$, die direkt auf die entsprechenden Drehmassen der Drehmomenterzeuger wirken.

Die zur Beschleunigung der Drehmassen 1, 2 erforderlichen Beschleunigungsmomente $M_{B1}$, $M_{B2}$ werden dazu vorzeichenrichtig mit dem erfassten Wellenmoment $M_W$ aufsummiert (und damit aus dem korrigierten inneren effektiven Prüflings-Drehmoment $M_{P\_int\_korr}$ eliminiert), womit die Summe der inneren Drehmomente übrig bleibt. Um aber trotzdem (trotz Eliminierung der Beschleunigungsmomente $M_{B1}$, $M_{B2}$) eine korrekte Gesamtenergie des Prüflings 20 abzubilden, werden deshalb die Trägheiten beider Drehmassen 1, 2 in Form der entsprechenden Massenträgheitsmomente $J_1$, $J_2$ (hier als Massenträgheitsmoment Jv eines Verbrennungsmotors und als Massenträgheitsmoment $J_E$ eines Elektromotors) bei der Berechnung des Sollwertes $\omega_{B\_soll}$ der Belastungsmaschine 3 (bzw. Soll-Belastungsmaschinendrehzahl $N_{B\_soll}$) berücksichtigt, was beispielsweise in der Simulationseinheit 13 erfolgt, wie in Fig.3 dargestellt ist.

Anstelle der tatsächlichen Massenträgheitsmomente $J_1$, $J_2$ könnten in der Simulationseinheit 13 beispielsweise auch simulierte Massenträgheitsmomente $J_{1\_sim}$, $J_{2\_sim}$ verwendet werden. Unter einem simulierten Massenträgheitsmoment $J_{i\_sim}$ ist allgemein ein, eine Drehmasse repräsentierendes Massenträgheitsmoment zu verstehen. Dabei könnte beispielsweise ein vom tatsächlichen Massenträgheitsmoment $J_1$, $J_2$, ...$J_i$ des am Prüfstand 30 aufgebauten Prüflings 20 abweichendes Massenträgheitsmoment verwendet werden oder ein veränderliches Massenträgheitsmoment, das sich z.B. während der Durchführung des Prüflaufs dynamisch ändern kann. Die berechnete Soll-Belastungsmaschinenwinkelgeschwindigkeit $\omega_{B\_soll}$ wird dann von der Belastungsmaschinenregeleinheit 9 am Prüfstand 30 eingeregelt. An dieser Stelle sei nochmals erwähnt, dass die gewählte Darstellung nur beispielhaft ist und dass der Beobachter 11 analog der Simulationseinheit 13 natürlich auch in ein anderes System integriert sein kann, z.B. in die Prüfstandsrecheneinheit 12 in Form von Software.

Wenn die Kupplung 4 offen ist, kann von der Berücksichtigung des Massenträgheitsmoments $J_1$ der ersten Drehmasse 1 im Beobachter 11 und in der Simulationseinheit 13 abgesehen werden und es ergibt sich die Ausführung nach dem Stand der Technik nach Fig.2. Die zur Ermittlung der Beschleunigungsmomente $M_{B1}$, $M_{B2}$ erforderlichen Winkelbeschleunigungen müssen aber nicht zwingend so wie in Fig.3 dargestellt über eine zeitliche Ableitung der vorzugsweise gemessenen Drehzahlen $N_1$, $N_2$, ermittelt werden, sondern es wäre natürlich auch eine direkte oder indirekte Messung der Winkelbeschleunigungen denkbar, z.B. mittels geeigneter Beschleunigungssensoren.

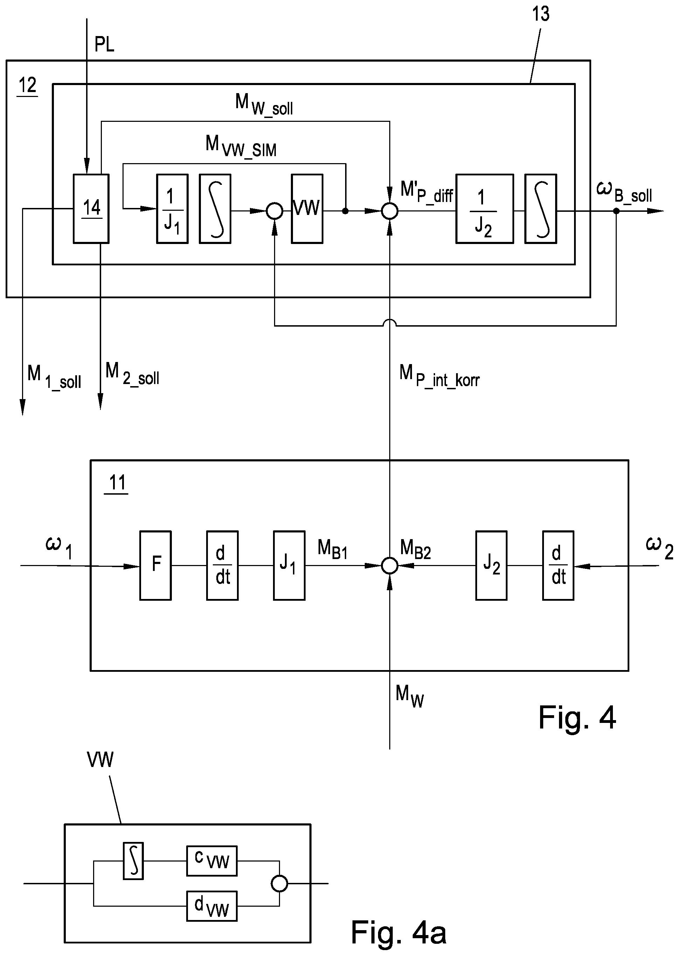

Mit der beschriebenen ersten Ausführungsform des erfindungsgemäßen Verfahrens kann eine stabile Regelung des Prüflings 20 und der Belastungsmaschine 3 am Prüfstand 30 erreicht werden. Nachteilig kann dabei aber sein, dass aufgrund der größeren simulierten Drehmasse in der Simulationseinheit 13 Eigenfrequenzen des simulierten Antriebsstrangs nicht realistisch abgebildet werden und dass Drehschwingungen der ersten Drehmasse 1 (insbesondere bei Verwendung eines Verbrennungsmotors) in unrealistischer Weise auf die simulierte Drehmasse (Summe der Massenträgheitsmomente $J_i$) in der Simulationseinheit 13 wirken, da die Entkopplung der Drehschwingungen der ersten Drehmasse 1 durch das Verbindungselement 5, hier die Verbindungswelle und die Kupplung 4 in der Simulationseinheit 13 nicht berücksichtigt ist. Um diese Nachteile zu beheben kann das Verfahren weiter verbessert werden, wie nachfolgend anhand Fig.4 erläutert wird.

Fig.4 zeigt das Zusammenwirken des Beobachters 11 und der in der Prüfstandsrecheneinheit 12 umgesetzten Simulationseinheit 13 zur Ermittlung der Soll-Belastungsmaschinendrehzahl $N_{B\_soll}$ (bzw. Soll-Belastungsmaschinenwinkelgeschwindigkeit $\omega_{B\_soll}$), wie schon zu Fig.3 beschrieben. Im Beobachter 11 wird das korrigierte innere effektive Prüflings-Drehmoment $M_{P\_int\_korr}$ im Wesentlichen anlog wie in Fig.3 ermittelt, aber mit dem Unterschied, dass bei der Ermittlung des Beschleunigungsmoments $M_{B1}$ des Verbrennungsmotors (erste Drehmasse 1) die Verbrennungsmotordrehzahl Nv (bzw. $\omega_v$) mittels eines geeigneten, optionalen Filters F gefiltert wird, um Drehzahlschwingungen zu filtern. Dies ist insbesondere bei einem Verbrennungsmotor vorteilhaft, um Verbrennungsstöße aus der Verbrennungsmotordrehzahl Nv zu filtern. Als Filter kann jeder geeignete Filter verwendet werden, beispielsweise ein Mittelwertfilter, wie ein bekannter CASMA-Filter. Natürlich ist die Filterung nicht auf die Drehzahl $N_i$ (bzw. $\omega_i$) beschränkt, beispielsweise könnte auch eine daraus berechnete Winkelbeschleunigung oder ein Beschleunigungsmoments $M_i$ gefiltert werden.

Das korrigierte innere effektive Prüflings-Drehmoment $M_{P\_int\_korr}$ des Beobachters 11 wird wieder der Prüfstandsrecheneinheit 12, hier insbesondere der Simulationseinheit 13 zugeführt. Das Soll-Prüflingsmoment $M_{W\_soll}$, wie z.B. das Soll-Wellenmoment an der Belastungswelle 6, wird der Simulationseinheit 13 entsprechend eines vorgegebenen Prüflaufs PL zugeführt. Im Unterschied zur ersten Ausgestaltung der Erfindung nach Fig.3 wird nicht die bloße Summe der Massenträgheitsmomente Ji der Drehmassen 1, 2 (hier Massenträgheitsmoment Jv des Verbrennungsmotors und Massenträgheitsmoment $J_E$ des Elektromotors) zur Ermittlung des Sollwerts $\omega_{B\_soll}$ der Belastungsmaschine 3 verwendet, sondern die Massenträgheitsmomente Ji werden mittels eines virtuellen Verbindungselements VW verbunden, um das Schwingungsverhalten des realen Verbindungselements 5 (und hier zusätzlich der Kupplung 4) gemäß des realen Prüfstandsaufbaus zu simulieren.

Wie in Fig.4 ersichtlich, wird ein simuliertes Verbindungselementmoment $M_{VW\_SIM}$ in der Simulationseinheit 13 zurückgeführt und mit dem Kehrwert des Massenträgheitsmoments $J_1$ des ersten Drehmasse 1 (hier Massenträgheitsmoment Jv des Verbrennungsmotors) multipliziert und zeitlich integriert. Aus der daraus resultierenden Winkelgeschwindigkeit und der rückgeführten Soll-Belastungsmaschinenwinkelgeschwindigkeit $\omega_{B\_soll}$ wird eine vorzeichenrichtige Summe gebildet und dem virtuellen Verbindungselement VW zugeführt. Das simulierte Verbindungselementmoment $M_{VW\_SIM}$ simuliert das Drehmoment am Verbindungselement 5, hier an der Verbindungswelle zwischen der ersten Drehmasse 1 und der zweiten Drehmasse 2 (hier Verbrennungsmotor und Elektromotor) im realen Prüfstandsaufbau am Prüfstand 30.

Das virtuelle Verbindungselement VW weist bestimmte mechanische Eigenschaften auf, um das Schwingungsverhalten des realen Verbindungselements 5 (und evtl. der Kupplung 4) zu simulieren. Beispielsweise können die mechanische Eigenschaften die in Fig.4a gezeigte Kombination einer (Dreh-)Federkonstante $c_{VW}$ und einem Dämpfungskoeffizienten dvw sein, wobei sich die tatsächlichen Werte der Federkonstante $c_{VW}$ und des Dämpfungskoeffizienten dvw nach der konkreten Ausgestaltung des Prüflings 20, insbesondere des realen Verbindungselements 5 und evtl. der Kupplung 4 richten und entsprechend festgelegt werden. Die mechanischen Eigenschaften des realen Verbindungselements 5 können sich natürlich erheblich unterscheiden. Beispielsweise weist ein Zahn- oder Keilreimen in der Regel eine andere Federkonstante $c_{VW}$ und einen anderen Dämpfungskoeffizienten dvw auf als eine Verbindungswelle oder eine Kette. Wenn das zurückgeführte korrigierte innere effektive Prüflings-Drehmoment $M_{P\_int\_korr}$ bereits um die am Prüfstand 30 vorliegenden Dämpfungsverluste reduziert ist, kann der Dämpfungskoeffizient dvw des virtuellen Verbindungselement VW auch vernachlässigt werden.

Allerdings ist zu beachten, dass durch die vereinfachte Abbildung der Kupplung 4 mittels des virtuellen Verbindungselements VW nicht sämtliche Schwingungseffekte der realen Kupplung 4 berücksichtigt werden können. Beispielsweise kann die reale Kupplung 4 bei geringen zu übertragenden Drehmomenten eine relativ geringe Steifigkeit aufweisen, was mit dem Verhalten eines bekannten Zweimassenschwungrades ZMS vergleichbar ist.

Die Anregung durch die erste Drehmasse 1 (hier des Verbrennungsmotors in Verbrennungsfrequenz) erfolgt entsprechend der realen Anordnung am Prüfstand 30 auf die zweite Drehmasse 2 (hier Elektromotor). Das bedeutet, dass das korrigierte innere effektive Prüflings-Drehmoment $M_{P\_int\_korr}$ in der Simulationseinheit 13 direkt auf das Massenträgheitsmoment $J_2$ der zweiten Drehmasse 2 (hier Massenträgheitsmoment $J_E$ des Elektromotors) wirkt, wie in Fig.4 ersichtlich ist. Die Soll-Belastungsmaschinenwinkelgeschwindigkeit $\omega_{B\_soll}$ (bzw. Soll-Belastungsmaschinendrehzahl $N_{B\_soll}$) wird im gezeigten zweiten Ausführungsbeispiel berechnet, indem das korrigierte innere effektive Prüflings-Drehmoment $M_{P\_int\_korr}$, das vorgegebene Soll-Prüflingsmoment $M_{W\_soll}$ und das simulierte Verbindungselementmoment $M_{VW\_SIM}$ vorzeichenrichtig zu einem zweiten Differenzmoment $M'_{P\_Diff}$ addiert werden. Das zweite Differenzmoment $M'_{P\_Diff}$ wird schließlich mit dem Kehrwert des Massenträgheitsmoments $J_2$ der zweiten Drehmasse 2 (hier des Elektromotors) multipliziert und zeitlich integriert.

Im Fall eines Verbrennungsmotors ändert die Drehmasse des Verbrennungsmotors das Schwingungsverhalten bezogen auf die Verbrennungsfrequenz des Verbrennungsmotors nur geringfügig, weil die Verbrennungsfrequenz deutlich über der Eigenfrequenz zwischen Verbrennungsmotor und der zweiten Drehmasse 2 (hier Elektromotor) liegt. Das Drehzahlverhalten der zweiten Drehmasse 2 (hier Elektromotor) entspricht folglich nahezu dem realen Drehzahlverhalten im Fahrzeug.

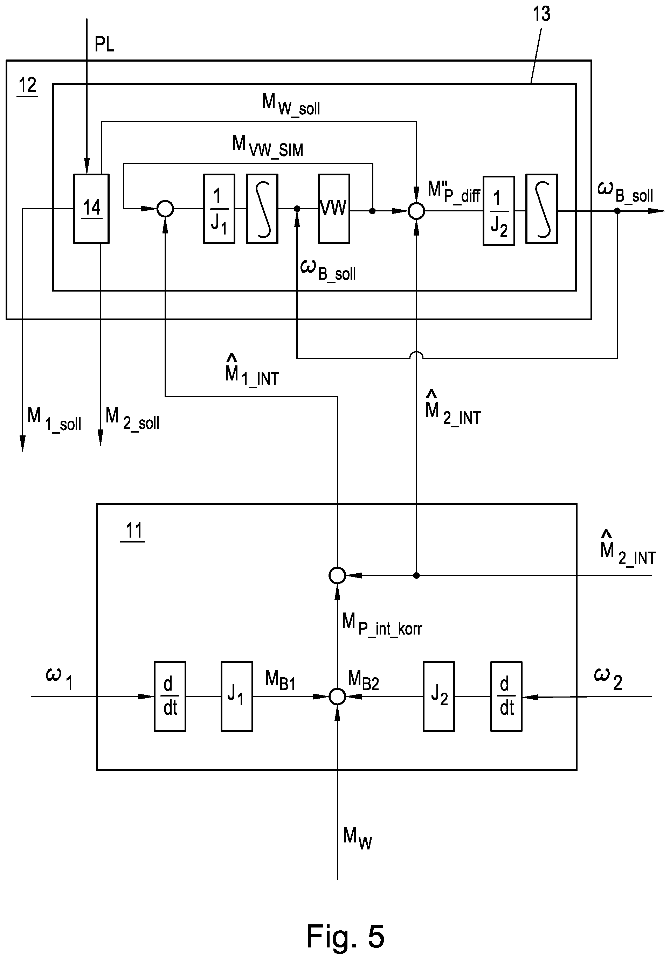

Die beschriebene zweite Ausgestaltung des erfindungsgemäßen Verfahrens kann jedoch den Nachteil haben, dass sich im Falle eines beschleunigenden Drehmoments der ersten Drehmasse 1 (hier Verbrennungsmotormoment Mv des Verbrennungsmotors) in der Simulation in der Simulationseinheit 13 eine leicht erhöhte Dynamik des Prüflings 20 im Vergleich zur realen Anwendung im Fahrzeug ergibt, weil das im Beobachter 11 ermittelte und mittels des Filters F gefilterte innere Drehmoment der ersten Drehmasse 1 (inneres Verbrennungsmotormoment) direkt auf die zweite Drehmasse 2 wirkt (Massenträgheitsmoment $J_E$ des Elektromotors) und nicht auf die entkoppelte erste Drehmasse 1 (hier Massenträgheitsmoment Jv des Verbrennungsmotors), wie in Fig.4 ersichtlich ist. Das innere Drehmoment der ersten Drehmasse 1 (hier das innere Verbrennungsmotormoment) ist im korrigierten inneren effektiven Prüflings-Drehmoment $M_{P\_int\_korr}$ enthalten und wirkt in der Simulationseinheit 13 direkt auf das Massenträgheitsmoment $J_2$ der zweiten Drehmasse 2 (hier Massenträgheitsmoment $J_E$ des Elektromotors). Um diesen Nachteil zu beseitigen kann das Verfahren noch weiter verbessert werden, wie nachfolgend anhand Fig.5 gezeigt wird.

Im Verfahren gemäß Fig.5 entspricht die Ermittlung des korrigierten inneren effektiven Prüflings-Drehmoments $M_{P\_int\_korr}$ im Beobachter 11 im Wesentlichen dem ersten Ausführungsbeispiel, das anhand des in Fig.3 gezeigten Beobachters 11 erläutert wurde. Das korrigierte innere effektive Prüflings-Drehmoment $M_{P\_int\_korr}$ wird nun allerdings mit einem geschätzten inneren Drehmoment $\widehat{M}_{2\_INT}$ der zweiten Drehmasse 2 (hier geschätztes inneres Elektromotormoment

$\widehat{M}_{E\_INT}$ ) vorzeichenrichtig zu einem geschätzten inneren Drehmoment $\widehat{M}_{1\_INT}$ der ersten Drehmasse 1 (hier geschätztes inneres Verbrennungsmotormoment $\widehat{M}_{V\_INT}$ ) aufsummiert. Das geschätzte innere Drehmoment $\widehat{M}_{1\_INT}$ der ersten Drehmasse 1 (geschätztes inneres Verbrennungsmotormoment $\widehat{M}_{V\_INT}$ ) wird der Simulationseinheit 13 zugeführt, wo es direkt auf das Massenträgheitsmoment $J_1$ der ersten Drehmasse 1 (hier Massenträgheitsmoment Jv des Verbrennungsmotors ) wirkt (und nicht wie zuvor in Fig.4 auf das Massenträgheitsmoment $J_2$ der zweiten Drehmasse 2, hier das Massenträgheitsmoment $J_E$ des Elektromotors).

Das geschätzte innere Drehmoment $\widehat{M}_{2\_INT}$ der zweiten Drehmasse 2 (hier geschätztes inneres Elektromotormoment $\widehat{M}_{E\_INT}$ ) wird vom Beobachter 11 der Simulationseinheit 13 zugeführt, wo es direkt auf das Massenträgheitsmoment $J_2$ der zweiten Drehmasse 2 (hier Massenträgheitsmoment $J_E$ des Elektromotors) wirkt. Damit kann das Schwingungsverhalten des Prüflings 20 realitätsgetreu nachgebildet werden, wobei es im Falle eines Verbrennungsmotors als erster Drehmasse 1 für eine stabile Regelung vorteilhaft ist, dass alle in den Beobachter 11 eingehenden Signale die Verbrennungsfrequenz des Verbrennungsmotors mit einer gleichen Verstärkung beinhalten und dass die Phasenlage der Signale konsistent ist. Das geschätzte innere Elektromotormoment $\widehat{M}_{E\_INT}$ kann beispielsweise aus der Stellgröße des Elektromotors 1a ermittelt werden oder aus einem zurückgemeldeten Ist-Elektromotormoment.

Die Soll-Belastungsmaschinenwinkelgeschwindigkeit $\omega_{B\_soll}$ (bzw. Soll- Belastungsmaschinendrehzahl $N_{B\_soll}$) wird im gezeigten dritten Ausführungsbeispiel berechnet, indem das geschätzte innere Drehmoment $\widehat{M}_{2\_INT}$ der zweiten Drehmasse 2 (hier geschätztes inneres Elektromotormoment $\widehat{M}_{E\_INT}$ ), das vorgegebene Soll-Prüflingsmoment $M_{W\_soll}$ und das simulierte Verbindungselementmoment $M_{VW\_SIM}$ vorzeichenrichtig zu einem dritten Differenzmoment $M''_{P\_Diff}$ aufsummiert werden und dass das dritte Differenzmoment $M''_{P\_Diff}$ mit dem Kehrwert des Massenträgheitsmoments $J_2$ der zweiten Drehmasse 2 (hier Massenträgheitsmoment $J_E$ des Elektromotors) multipliziert und zeitlich integriert wird. Das simulierte Verbindungselementmoment $M_{VW\_sim}$ wird hier ermittelt, indem eine vorzeichenrichtige Summe aus dem zurückgeführten simulierten Verbindungselementmoment $M_{VW\_sim}$ und dem geschätzten inneren Drehmoment $\widehat{M}_{1\_INT}$ der ersten Drehmasse 1 (hier geschätztes inneres Verbrennungsmotormoment $\widehat{M}_{V\_INT}$ ) gebildet wird, mit dem Kehrwert des Massenträgheitsmoments $J_1$ der ersten Drehmasse 1 (hier Massenträgheitsmoment Jv des Verbrennungsmotors) multipliziert und zeitlich integriert wird. Die daraus resultierende Winkelgeschwindigkeit und die zurückgeführte Soll-Belastungsmaschinenwinkelgeschwindigkeit $\omega_{B\_soll}$ werden vorzeichenrichtig aufsummiert und dem virtuellen Verbindungselement VW zugeführt, welches wiederum entsprechende mechanische Eigenschaften aufweist. Die mechanischen Eigenschaften des virtuellen Verbindungselements VW können analog wie in Fig.4a angesetzt werden.

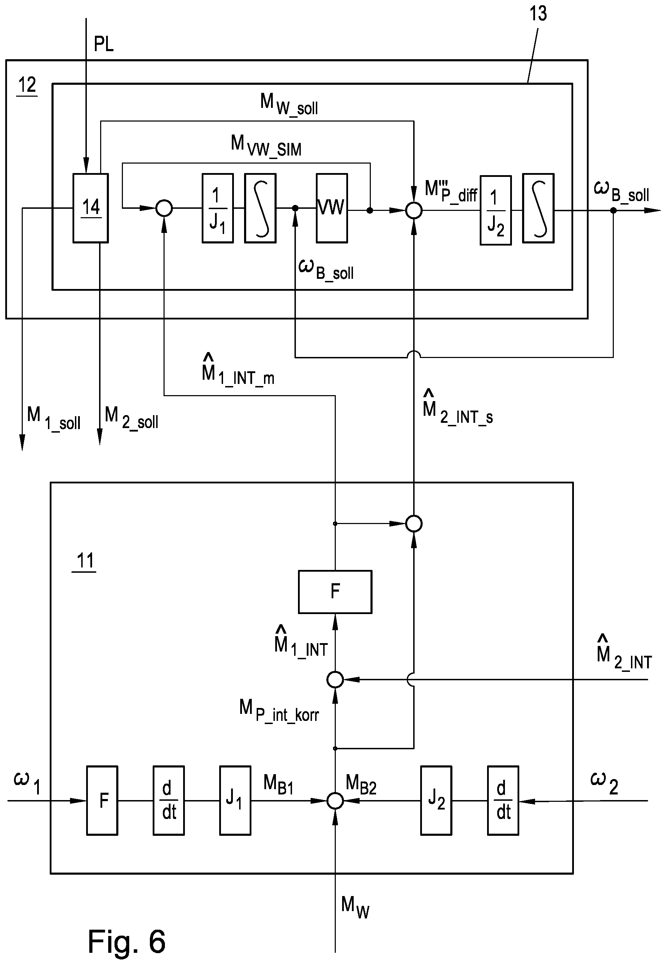

Wenn das geschätzte innere Elektromotormoment $\widehat{M}_{E\_INT}$ ), oder allgemein das geschätzte innere Drehmoment $\widehat{M}_{2\_INT}$ der zweiten Drehmasse 2, allerdings nur in einer wenig dynamischen Form vorliegt (beispielsweise in Form eines gemittelten Drehmoments oder eines Soll-Moments einer übergeordneten Steuereinheit wie z.B. der Prüflingsregelungseinheit 21) und die zweite Drehmasse 2 (hier Elektromotor) auch zur Kompensation von Verbrennungsschwingungen eingesetzt wird, kann das Verfahren erweitert werden, wie nachfolgend unter Bezugnahme auf Fig.6 erläutert wird.

Im Ausführungsbeispiel gemäß Fig.6 entspricht die Ermittlung des korrigierten inneren effektiven Prüflings-Drehmoments $M_{P\_int\_korr}$ im Beobachter 11 im Wesentlichen dem ersten Ausführungsbeispiel, das anhand des in Fig.4 gezeigten Beobachters 11 erläutert wurde, bei dem die Winkelgeschwindigkeit $\omega 1$ bzw. die Drehzahl $N_1$ der ersten Drehmasse 1 (hier Verbrennungsmotordrehzahl Nv) mittels eines Filters F gefiltert wird, insbesondere um Verbrennungsstöße des Verbrennungsmotors zu filtern. Das korrigierte innere effektive Prüflings-Drehmoment $M_{P\_int\_korr}$ enthält damit aber weiterhin Schwingungen in Verbrennungsfrequenz des Verbrennungsmotors, welche über das gemessene Wellenmoment Mw und über die gemessene Drehzahl $N_2$ bzw. Winkelgeschwindigkeit $\omega_2$ der zweiten Drehmasse 2 (hier des Elektromotors) eingebracht werden. Das korrigierte innere effektive Prüflings-Drehmoment $M_{P\_int\_korr}$ und ein geschätztes inneres Drehmoment $\widehat{M}_{2\_INT}$ der zweiten Drehmasse 2 (hier des Elektromotors) werden vorzeichenrichtig zu einem geschätzten inneren Drehmoment $\widehat{M}_{1\_INT}$ der ersten Drehmasse 1 (hier geschätztes inneres Verbrennungsmotormoment $\widehat{M}_{V\_INT}$) summiert (analog Fig.5).

Um ein geschätztes mittleres inneres Drehmoment $\widehat{M}_{1\_INT\_M}$ der ersten Drehmasse 1 zu ermitteln (hier geschätztes mittleres inneres Verbrennungsmotormoment $\widehat{M}_{V\_INT\_M}$), wird das geschätzte innere Drehmoment $\widehat{M}_{1\_INT}$ der ersten Drehmasse 1 (hier geschätztes inneres Verbrennungsmotormoment $\widehat{M}_{V\_INT}$) erneut mittels eines Filters F gefiltert, um Schwingungen, insbesondere Verbrennungsstöße des Verbrennungsmotors zu filtern, welche über das gemessene Wellenmoment Mw und die gemessene Drehzahl $N_2$ bzw. Winkelgeschwindigkeit $\omega_2$ der zweiten Drehmasse 2 (hier Elektromotor) in den Beobachter 11 eingebracht werden.

Das ermittelte geschätzte mittlere innere Drehmoment $\widehat{M}_{1\_INT\_M}$ der ersten Drehmasse 1 (hier geschätztes mittleres inneres Verbrennungsmotormoment $\widehat{M}_{V\_INT\_M}$) und das korrigierte innere effektive Prüflings-Drehmoment $M_{P\_int\_korr}$ werden vorzeichenrichtig zu einem schwingenden geschätzten inneren Drehmoment $\widehat{M}_{2\_INT\_S}$ der zweiten Drehmasse 2 (hier schwingendes geschätztes inneres Elektromotormoment $\widehat{M}_{E\_INT\_S}$) addiert, welches weiterhin die über das gemessene Wellenmoment Mw und die gemessene Drehzahl $N_2$ bzw. Winkelgeschwindigkeit $\omega_2$ der zweiten Drehmasse 2 bzw. Elektromotors eingebrachten Schwingungen enthält. Das ermittelte schwingende geschätzte innere Drehmoment $\widehat{M}_{2\_INT\_S}$ der zweiten Drehmasse 2 (hier schwingendes geschätztes inneres Elektromotormoment $\widehat{M}_{E\_INT\_S}$) und das ermittelte geschätzte mittlere innere Drehmoment $\widehat{M}_{1\_INT\_M}$ der ersten Drehmasse 1 (hier geschätztes mittleres inneres Verbrennungsmotormoment $\widehat{M}_{V\_INT\_M}$) werden der Simulationseinheit 13 zur Berechnung der Soll-Belastungsmaschinenwinkelgeschwindigkeit $\omega_{B\_soll}$ (bzw. Soll-Belastungsmaschinendrehzahl $N_{B\_soll}$) zugeführt.

Die Soll-Belastungsmaschinenwinkelgeschwindigkeit $\omega_{B\_soll}$ (bzw. Soll-Belastungsmaschinendrehzahl $N_{B\_soll}$) wird hier berechnet, indem das schwingende geschätzte innere Drehmoment $\widehat{M}_{2\_INT\_S}$ der zweiten Drehmasse 2 (hier schwingendes geschätztes inneres Elektromotormoment $\widehat{M}_{E\_INT\_S}$) das vorgegebene Soll-Prüflingsmoment $M_{W\_soll}$ und das simulierte Verbindungselementmoment $M_{VW\_SIM}$ vorzeichenrichtig zu einem vierten Differenzmoment $M'''_{P\_Diff}$ aufsummiert werden. Das vierte Differenzmoment $M'''_{P\_Diff}$ wird mit dem Kehrwert des Massenträgheitsmoments $J_2$ der zweiten Drehmasse 2 (hier Massenträgheitsmoments $J_E$ des Elektromotors) multipliziert und zeitlich integriert.

Das simulierte Verbindungselementmoment $M_{VW\_sim}$ wird hier ermittelt, indem eine vorzeichenrichtige Summe aus dem zurückgeführten simulierten Verbindungselementmoment $M_{VW\_sim}$ und dem geschätzten mittleren inneren Drehmoment $\widehat{M}_{1\_INT\_M}$ der ersten Drehmasse 1 (hier geschätztes mittleres inneres Verbrennungsmotormoment $\widehat{M}_{V\_INT\_M}$) gebildet wird, welche mit dem Kehrwert des Massenträgheitsmoments $J_1$ der ersten Drehmasse 1 (hier Massenträgheitsmoment Jv des Verbrennungsmotors) multipliziert und zeitlich integriert wird. Die daraus resultierende Winkelgeschwindigkeit und die zurückgeführte Soll-Belastungsmaschinenwinkelgeschwindigkeit $\omega_{B\_soll}$ werden vorzeichenrichtig aufsummiert und dem virtuellen Verbindungselement VW zugeführt, welche wiederum entsprechende mechanische Eigenschaften aufweist. Die mechanischen Eigenschaften des virtuellen Verbindungselements VW können analog wie in Fig.4a angesetzt werden.

Die gegenständliche Erfindung wurde zum besseren Verständnis anhand der konkreten Ausgestaltung des Prüflings 20 als P2-Aggregat beschrieben. Das Ausführungsbeispiel zeigt damit eine konkrete praktische Anwendung, die allerdings nicht einschränkend für die Erfindung zu verstehen ist. Von der Erfindung ist auch jede andere Anordnung umfasst, die zumindest zwei drehfest verbundene Drehmassen 1, 2, ...x als Prüfling 20 aufweist, wobei zumindest eine der Drehmassen 1, 2, ...x über eine Belastungswelle 6 mit einer Belastungsmaschine 9 verbunden ist. Beispielsweise könnten auch drei oder mehr Drehmassen 1, 2, ...x vorgesehen werden, die jeweils mittels eines Verbindungselements 5 verbunden sind.

Im gezeigten Beispiel könnte beispielsweise links an die erste Drehmasse 1 (hier als Drehmomenterzeuger bzw. Verbrennungsmotor 1 ausgeführt) eine dritte Drehmasse 15 mittels eines zweiten Verbindungselements 5a angebunden werden. Die dritte Drehmasse 15 könnte erneut ein Drehmomenterzeuger oder eine passive, nicht angetriebene Drehmasse sein. Das zweite Verbindungselement 5a kann dabei wiederum eine Verbindungswelle oder eine andersartige drehfeste Verbindung sein, z.B. der genannte Riemen oder eine Kette. Das Verfahren würde folglich in naheliegender Weise um die dritte Drehmasse 15 ergänzt werden. Im Beispiel gemäß Fig.3 würde das beispielsweise bedeuten, dass im Beobachter 11 bei der Ermittlung des korrigierten inneren effektiven Prüflings-Drehmoments $M_{P\_int\_korr}$ in analoger Weise berücksichtigt wird, wie die erste und zweite Drehmasse 1, 2. Es würde also das an der Belastungswelle 6 gemessene Wellenmoment Mw zusätzlich um ein Beschleunigungsmoment $M_{B15}$ zur Beschleunigung der dritten Drehmasse 15 korrigiert werden, wie gestrichelt angedeutet ist. Das Beschleunigungsmoment $M_{B15}$ könnte wiederum aus der zeitlichen Ableitung der Drehzahl $N_{15}$ bzw. Winkelgeschwindigkeit $\omega_{15}$ (oder alternativ aus einer gemessenen Winkelbeschleunigung) und dem Massenträgheitsmoment $J_{15}$ berechnet werden.

Die Berechnung der Belastungsmaschinendrehzahl $N_{B\_soll}$ in der Simulationseinheit 13 könnte in analoger Weise erfolgen, indem das Differenzmoment $M_{P\_diff}$ mit dem Kehrwert der Summe der Massenträgheitsmomente $J_i$ der Drehmassen des Prüflings 20 multipliziert und das Ergebnis zeitlich integriert wird. Bei der Summe der Massenträgheitsmomente $J_i$ der Drehmassen ist nun das Massenträgheitsmoment $J_{15}$ der dritten Drehmasse 15 ebenfalls zu berücksichtigen. Wenn die dritte Drehmasse 15 ein Drehmomenterzeuger ist, ist natürlich vorzugsweise eine (nicht dargestellte) weitere (dritte) Regelungseinheit zur Regelung des dritten Drehmomenterzeugers vorgesehen. Die dritte Regelungseinheit kann natürlich wiederum in der Prüflingsregeleinheit 21 integriert sein. Die dritte Regelungseinheit kann wiederum Sollwerte vom Simulationsmodell 14 erhalten, beispielsweise ein Soll-Drehmoment $M_{15\_soll}$, wie in Fig.3 gestrichelt angedeutet, und daraus eine Stellgröße für den Drehmomenterzeuger berechnen. Die Ausführungsbeispiele gemäß Fig.4-Fig.6 können natürlich in ähnlicher Weise um eine oder mehrere aktive Drehmassen (Drehmomenterzeuger) oder passive Drehmassen erweitert werden. In der Simulationseinheit 13 ist dazu natürlich der konkrete Aufbau des Prüflings 20 am Prüfstand 30 zu berücksichtigen. Wenn beispielsweise wie erwähnt, eine dritte Drehmasse 15 über ein zweites Verbindungselement 5a (z.B. eine Verbindungswelle) an die erste Drehmasse 1 (bzw. den Verbrennungsmotor) drehfest angebunden ist (siehe Fig.1 gestrichelt angedeutet), sind in der Simulationseinheit 13 das tatsächliche Massenträgheitsmoment $J_{15}$ der dritten Drehmasse 15 (oder ein, eine bestimmte Drehmasse repräsentierendes, simuliertes Massenträgheitsmoment $J_{15\_sim}$) und ein zweites virtuelles Verbindungselement VW2 zu berücksichtigen. Das zweite virtuelle Verbindungselement VW2 weist natürlich wiederum bestimmte mechanische Eigenschaften auf, insbesondere eine Federkonstante cvvv und einen Dämpfungskoeffizienten dvw.

Beispielhaft wird die anhand Fig.4 beschriebene Ausführungsform um eine dritte Drehmasse 15 erweitert und nachfolgend anhand Fig.7 im Detail erläutert.

Fig.7 zeigt das Zusammenwirken des Beobachters 11 und der Prüfstandsrecheneinheit 12 zur Ermittlung der Soll-Belastungsmaschinendrehzahl $N_{B\_soll}$ (bzw. Soll-Belastungsmaschinenwinkelgeschwindigkeit $\omega_{B\_soll}$) analog wie schon zu Fig.4 beschrieben wurde, allerdings um eine dritte Drehmasse 15 erweitert. Im Beobachter 11 wird das korrigierte innere effektive Prüflings-Drehmoment $M_{P\_int\_korr}$ im Wesentlichen anlog ermittelt, wie in Fig.3 gestrichelt angedeutet ist. Das korrigierte innere effektive Prüflings-Drehmoment $M_{P\_int\_korr}$ des Beobachters 11 wird wieder der Prüfstandsrecheneinheit 12, hier insbesondere der Simulationseinheit 13 zugeführt. Das Soll-Prüflingsmoment $M_{W\_soll}$ wird der Simulationseinheit 13 entsprechend eines vorgegebenen Prüflaufs PL zugeführt (oder aus einer anderen Quelle).

Im Unterschied zur ersten Ausgestaltung der Erfindung gemäß der gestrichelten Ergänzung in Fig.3, wird nicht die bloße Summe der Massenträgheitsmomente Ji der Drehmassen 1, 2, 15 zur Ermittlung des Sollwerts $\omega_{B\_soll}$ der Belastungsmaschine 3 verwendet, sondern die Massenträgheitsmomente Ji werden mittels virtueller Verbindungselemente VW, VW2 verbunden, um das Schwingungsverhalten der realen Verbindungselemente 5, 5a gemäß des realen Prüfstandsaufbaus zu simulieren. Wie in Fig.7 ersichtlich, wird ein simuliertes Verbindungselementmoment $M_{VW\_SIM}$ des virtuellen Verbindungselements VW in der Simulationseinheit 13 zurückgeführt und mit dem Kehrwert des Massenträgheitsmoments $J_1$ der ersten Drehmasse 1 multipliziert und zeitlich integriert. Aus der daraus resultierenden Winkelgeschwindigkeit $\omega_{1\_sim}$ und der rückgeführten Soll-Belastungsmaschinenwinkelgeschwindigkeit $\omega_{B\_soll}$ wird eine vorzeichenrichtige Summe gebildet und dem virtuellen Verbindungselement VW zugeführt. Das simulierte Verbindungselementmoment $M_{VW\_SIM}$ simuliert das Drehmoment am Verbindungselement 5, hier an der Verbindungswelle zwischen der ersten Drehmasse 1 und der zweiten Drehmasse 2 (z.B. Verbrennungsmotor und Elektromotor) im realen Prüfstandsaufbau am Prüfstand 30.

Das virtuelle Verbindungselementmoment $M_{VW2\_sim}$ des virtuellen Verbindungselements VW2 wird ermittelt, indem das simulierte Verbindungselementmoment $M_{VW2\_sim}$ des virtuellen Verbindungselements VW2 in der Simulationseinheit 13 zurückgeführt und mit dem Kehrwert des Massenträgheitsmoments $J_{15}$ der dritten Drehmasse 15 multipliziert und zeitlich integriert wird. Aus der daraus resultierenden Winkelgeschwindigkeit $\omega_{15}$ und der rückgeführten Winkelgeschwindigkeit $\omega_{1\_sim}$

wird eine vorzeichenrichtige Summe gebildet und dem virtuellen Verbindungselement VW2 zugeführt, wie in Fig.7 dargestellt ist.

Die virtuellen Verbindungselemente VW, VW2 weisen wiederum bestimmte mechanische Eigenschaften auf, um das Schwingungsverhalten der realen Verbindungselemente 5, 5a (und evtl. der Kupplung 4 und/oder einer nicht dargestellten weiteren Kupplung zwischen der ersten und der dritten Drehmasse 1, 15) zu simulieren. Beispielsweise können die mechanische Eigenschaften die in Fig.4a gezeigte Kombination einer (Dreh-)Federkonstante $c_{VW}$ und einem Dämpfungskoeffizienten dvw sein, wobei sich die tatsächlichen Werte der Federkonstante $c_{VW}$ und des Dämpfungskoeffizienten $d_{VW}$ nach der konkreten Ausgestaltung des Prüflings 20, insbesondere der realen Verbindungselemente 5, 5a und evtl. vorhandener Kupplung(en) 4 richten und entsprechend festgelegt werden. Die mechanischen Eigenschaften des realen Verbindungselements 5 können sich natürlich auch von den mechanischen Eigenschaften des realen Verbindungselements 5a unterscheiden, je nach konkreter Ausgestaltung der realen Verbindungselemente 5, 5a. Beispielsweise weist ein Zahn- oder Keilreimen in der Regel eine andere Federkonstante $c_{VW}$ und einen anderen Dämpfungskoeffizienten dvw auf als eine Verbindungswelle oder eine Kette.

Die Anregung durch die erste und dritte Drehmasse 1, 15 erfolgt entsprechend der realen Anordnung am Prüfstand 30 auf die zweite Drehmasse 2. Das bedeutet, dass das korrigierte innere effektive Prüflings-Drehmoment $M_{P\_int\_korr}$ in der Simulationseinheit 13 direkt auf das Massenträgheitsmoment $J_2$ der zweiten Drehmasse 2 wirkt, wie in Fig.7 ersichtlich ist. Die Soll-Belastungsmaschinenwinkelgeschwindigkeit $\omega_{B\_soll}$ (bzw. Soll-Belastungsmaschinendrehzahl $N_{B\_soll}$) wird im gezeigten zweiten Ausführungsbeispiel berechnet, indem das korrigierte innere effektive Prüflings-Drehmoment $M_{P\_int\_korr}$, das vorgegebene Soll-Prüflingsmoment $M_{W\_soll}$ und das simulierte Verbindungselementmoment $M_{VW\_SIM}$ vorzeichenrichtig zu einem zweiten Differenzmoment $M'_{P\_Diff}$ addiert werden. Das zweite Differenzmoment $M'_{P\_Diff}$ wird schließlich mit dem Kehrwert des Massenträgheitsmoments $J_2$ der zweiten Drehmasse 2 multipliziert und zeitlich integriert.

Wenn am zweiten Verbindungselement 5a zwischen der ersten Drehmasse 1 und der dritten Drehmasse 15 beispielsweise eine nicht dargestellte Kupplung vorgesehen ist, kann die dritte Drehmasse 15 von der ersten Drehmasse 1 entkoppelt werden. Für die Regelung würde ein Entkoppeln der dritten Drehmasse 15 natürlich bedeuten, dass die dritte Drehmasse 15 bei der Ermittlung des korrigierten inneren effektiven Prüflings-Drehmoments $M_{P\_int\_korr}$ im Beobachter 11 sowie bei der Ermittlung der Soll-Belastungsmaschinendrehzahl $N_{B\_soll}$ in der Simulationseinheit 13 unberücksichtigt bleibt.

Natürlich können auch die in Fig.5 und Fig.6 gezeigten Ausführungsformen analog um eine oder mehrere weitere Drehmassen erweitert werden. In Fig.8 ist dazu beispielhaft die Erweiterung des Verfahrens gemäß Fig.5 um eine dritte Drehmasse 15 dargestellt. Das geschätzte innere Drehmoment $\widehat{M}_{2\_INT}$ der zweiten Drehmasse 2 kann im Falle eines Elektromotors z.B. als geschätztes inneres Elektromotormoment $\widehat{M}_{E\_INT}$), aus der Stellgröße des Elektromotors geschätzt werden.

Das geschätzte innere Drehmoment $\widehat{M}_{15\_INT}$ der dritten Drehmasse 15 könnte z.B. ein bekanntes Reibungsmoment einer mit der ersten Drehmasse 1 verbundenen passiven Drehmasse 15 (Siehe Fig.1) sein und beispielsweise aus einer vorgegebenen Kennlinie geschätzt werden. Da die Erweiterung um eine oder mehrere Drehmassen für den Fachmann fachmännisches Handeln ist, wird an dieser Stelle auf eine detaillierte Beschreibung verzichtet und auf die Ausführungen zu Fig.5 und Fig.6 verwiesen.

Das erfindungsgemäße Verfahren kann in vorteilhafter Weise auch für einen Prüfling 20 verwendet werden, der einen Verbrennungsmotor mit einem Zweimassenschwungrad aufweist. Das Zweimassenschwungrad weist eine Primärschwungmasse und eine Sekundärschwungmasse auf, die über einen Drehschwingungsdämpfer drehfest verbunden sind. Die Primärschwungmasse ist mit dem Verbrennungsmotor gekoppelt und bildet gemeinsam mit dem Verbrennungsmotor die erste Drehmasse 1 gemäß der Erfindung aus. Die Sekundärschwungmasse bildet die zweite Drehmasse 2 aus und ist über die Belastungswelle 6 mit der Belastungsmaschine verbunden. Für die drehfeste Verbindung durch den Drehschwingungsdämpfer ist in der Simulationseinheit 13 wiederum ein virtuelles Verbindungselement VW mit entsprechenden mechanischen Eigenschaften anzusetzen, um das Zweimassenschwungrad möglichst real abzubilden. Die Verfahrensschritte bleiben aber grundsätzlich gleich.

Weiters wäre es denkbar, dass mehr als eine Belastungsmaschine 3 am Prüfstand 30 vorgesehen ist, die mit dem Prüfling 20 über jeweils eine Belastungswelle 6 zum Antrieb oder zur Belastung des Prüflings 20 verbunden sind. Beispielsweise könnte als Prüfling 20 ein Getriebe mit mehreren jeweils über ein Verbindungselement 5 drehfest verbundene Drehmassen 1, 2, ...x vorgesehen sein, wobei der Getriebeeingang über eine erste Belastungswelle 6 mit einer ersten Belastungsmaschine 3 verbunden ist und der Getriebeausgang über eine zweite Belastungswelle 6 mit einer zweiten Belastungsmaschine 3 verbunden ist. Beide Belastungsmaschinen 3 werden jeweils von einer Belastungsmaschinenregeleinheit 9 (oder einer gemeinsamen Belastungsmaschinenregeleinheit) geregelt. Das erfindungsgemäße Verfahren kann zur Regelung einer der beiden Belastungsmaschinen 3 verwendet werden, wobei die jeweils andere Belastungsmaschine 3 herkömmlich geregelt wird, beispielsweise durch eine Regelung der an der jeweiligen Belastungsmaschine 3 gemessenen Drehzahl. Wird auch an der nicht mit dem erfindungsgemäßen Verfahren betriebenen Belastungsmaschine 3 das Wellenmoment Mw in der Belastungswelle 6 ermittelt, wird dieses Wellenmoment Mw vorzugsweise zusätzlich zur Berechnung des korrigierten inneren effektiven Prüflingsdrehmoments $M_{P\_int\_korr}$ herangezogen, um die jeweils andere Belastungsmaschine 3 mit dem erfindungsgemäßen Verfahren zu regeln.

**Patentansprüche**

1. Verfahren zum Betreiben eines Prüfstands (30) mit einem Prüfling (20) mit zumindest zwei drehfest verbundenen Drehmassen (1, 2) mit jeweils einem Massenträgheitsmoment (J1, J2), wobei zumindest eine Drehmasse (1, 2) mittels einer Belastungswelle (6) mit einer Belastungsmaschine (3) zum Antrieb oder zur Belastung des Prüflings (20) verbunden wird, wobei die Belastungsmaschine (3) von einer Belastungsmaschinenregeleinheit (9) geregelt wird, wobei am Prüfstand (30) Belastungen auf den Prüfling (20) aufgebracht werden und ein inneres Prüflings-Drehmoment ($M_{P\_int}$) geschätzt wird, das zur Ermittlung einer Soll-Belastungsmaschinendrehzahl ($N_{B\_soll}$) verwendet wird, die von der Belastungsmaschinenregeleinheit (9) eingeregelt wird und wobei für die zumindest eine Belastungswelle (6) ein in der Belastungswelle (6) wirkendes Wellenmoment (Mw) ermittelt wird, **dadurch gekennzeichnet, dass** das ermittelte Wellenmoment (Mw) mit ermittelten Beschleunigungsmomenten ($M_{B1}$, $M_{B2}$) zur Beschleunigung der zumindest zwei Drehmassen (1, 2) vorzeichenrichtig zu einem korrigierten inneren effektiven Prüflings-Drehmoment ($M_{P\_int\_korr}$) summiert wird **und dass** die Soll-Belastungsmaschinendrehzahl ($N_{B\_soll}$) aus dem korrigierten inneren effektiven Prüflings-Drehmoment ($M_{P\_int\_korr}$) oder einem daraus abgeleiteten Drehmoment ( $\hat{M}_{1\_INT}, \hat{M}_{1\_INT\_M}, \hat{M}_{2\_INT}, \hat{M}_{2\_INT\_S}$ ), einem vorgegebenen Soll-Prüflingsmoment ($M_{W\_soll}$) und aus den Massenträgheitsmomenten ($J_1$, $J_2$) oder simulierten Massenträgheitsmomenten ($J_{1\_sim}$, $J_{2\_sim}$) der zumindest zwei Drehmassen (1, 2) ermittelt wird.

2. Verfahren nach Anspruch 1, **dadurch gekennzeichnet, dass** das in zumindest einer Belastungswelle (6) wirkende Wellenmoment (Mw) mittels einer Drehmomentmesseinrichtung an der Belastungswelle (6) gemessen wird und/oder dass das Beschleunigungsmoment ($M_{B1}$, $M_{B2}$) zumindest einer Drehmasse (1, 2) aus einer Drehzahl ($N_1$, $N_2$) der jeweiligen Drehmasse (1, 2) und aus dem Massenträgheitsmoment ($J_1$, $J_2$) der jeweiligen Drehmasse (1, 2) ermittelt wird.

3. Verfahren nach Anspruch 2, **dadurch gekennzeichnet, dass** die Drehzahl ($N_1$, $N_2$) der zumindest einen Drehmasse (1, 2), für die das Beschleunigungsmoment ($M_{B1}$, $M_{B2}$) ermittelt wird, mittels einer Drehzahlmesseinrichtung am Prüfstand (30) gemessen wird, wobei vorzugsweise die gemessene Drehzahl ($N_1$, $N_2$), eine daraus berechnete Winkelbeschleunigung oder zumindest ein Beschleunigungsmoment (MB1, MB2) mittels eines Filters (F) gefiltert wird.

4. Verfahren nach einem der Ansprüche 1 bis 3, **dadurch gekennzeichnet, dass** als zumindest eine Drehmasse (1, 2) des Prüflings (20) ein Drehmomenterzeuger vorgesehen wird, der mittels einer Prüflingsregeleinheit (21) geregelt wird, wobei vorzugsweise als Drehmomenterzeuger ein Verbrennungsmotor verwendet wird, der von einer Verbrennungsmotor-Regelungseinheit (7) geregelt wird oder ein Elektromotor vorgesehen wird, der von einer Elektromotor-Regelungseinheit (8) geregelt wird.

5. Verfahren nach einem der Ansprüche 1 bis 4, **dadurch gekennzeichnet, dass** für zwei drehfest verbundene Drehmassen (1, 2) des Prüflings (20) ein Zwei-Massen-Schwungrad (ZMS) verwendet wird und/oder dass zwei Drehmassen (1, 2) mit einer Verbindungswelle, einem Riemen oder einer Kette drehfest verbunden werden.

6. Verfahren nach einem der Ansprüche 1 bis 5, **dadurch gekennzeichnet, dass** die Soll-Belastungsmaschinendrehzahl ($N_{B\_soll}$) ermittelt wird, indem das korrigierte innere effektive Prüflings-Drehmoment ($M_{P\_int\_korr}$) und das vorgegebene Soll-Prüflingsmoment ($M_{W\_soll}$) vorzeichenrichtig zu einem ersten Differenzmoment ($M_{P\_Diff}$) summiert werden und dass das erste Differenzmoment ($M_{P\_Diff}$) mit dem Kehrwert einer Summe der Massenträgheitsmomente ($J_1$, $J_2$) oder simulierten Massenträgheitsmomente ($J_{1\_sim}$, $J_{2\_sim}$) der zumindest zwei Drehmassen (1, 2) multipliziert und zeitlich integriert wird.

7. Verfahren nach einem der Ansprüche 1 bis 5, **dadurch gekennzeichnet, dass** die Soll-Belastungsmaschinendrehzahl ($N_{B\_soll}$) ermittelt wird, indem das korrigierte innere effektive Prüflings-Drehmoment ($M_{P\_int\_korr}$), das vorgegebene Soll-Prüflingsmoment ($M_{W\_soll}$) und zumindest ein simuliertes Verbindungselementmoment ($M_{VW\_sim}$) eines, die drehfeste Verbindung der zumindest zwei Drehmassen (1, 2) abbildenden virtuellen Verbindungselements (VW) vorzeichenrichtig zu einem zweiten Differenzmoment ($M'_{P\_Diff}$) summiert werden und dass das zweite Differenzmoment ($M'_{P\_Diff}$) mit dem Kehrwert des Massenträgheitsmoments ($J_2$) oder eines simulierten Massenträgheitsmoments ($J_{2\_sim}$) der mit der Belastungswelle (6) verbundenen Drehmasse (2) multipliziert und zeitlich integriert wird, wobei das zumindest eine simulierte Verbindungselementmoment ($M_{VW\_sim}$) aus dem Massenträgheitsmoment ($J_1$) oder eines simulierten Massenträgheitsmoments ($J_{1\_sim}$) der zumindest einen übrigen Drehmasse (1), aus der rückgeführten Soll-Belastungsmaschinendrehzahl ($N_{B\_soll}$) und mechanischen Eigenschaften des virtuellen Verbindungselements (VW) ermittelt wird.

8. Verfahren nach einem der Ansprüche 1 bis 5, **dadurch gekennzeichnet, dass** die Soll-Belastungsmaschinendrehzahl ($N_{B\_soll}$) ermittelt wird, indem das vorgegebene Soll-Prüflingsmoment ($M_{W\_soll}$), ein simuliertes Verbindungelementmoment ($M_{VW\_sim}$) eines, die drehfeste Verbindung der zumindest zwei Drehmassen (1, 2) abbildenden virtuellen Verbindungselements (VW) und ein geschätztes inneres Drehmoment ($\widehat{M}_{2\_INT}$) der mit der Belastungswelle (6) verbundenen Drehmasse (2) vorzeichenrichtig zu einem dritten Differenzmoment ($M''_{P\_Diff}$) addiert werden und dass das dritte Differenzmoment ($M''_{P\_Diff}$) mit dem Kehrwert des Massenträgheitsmoments ($J_2$) oder eines simulierten Massenträgheitsmoments ($J_{2\_sim}$) der mit der Belastungswelle (6) verbundenen Drehmasse (2) multipliziert und zeitlich integriert wird, wobei das zumindest eine simulierte Verbindungselementmoment ($M_{VW\_sim}$) aus dem Massenträgheitsmoment ($J_1$) oder eines simulierten Massenträgheitsmoments ($J_{1\_sim}$) der zumindest einen weiteren Drehmasse (1), aus der rückgeführten Soll-Belastungsmaschinendrehzahl ($N_{B\_soll}$), aus mechanischen Eigenschaften des zumindest einen virtuellen Verbindungselements (VW) und aus einem geschätzten inneren Drehmoment ($\widehat{M}_{1\_INT}$) der zumindest einen weiteren Drehmasse (1) ermittelt wird, das aus einer vorzeichenrichtigen Summe des korrigierten inneren effektiven Prüflings-Drehmoments ($M_{P\_int\_korr}$) und eines geschätzten inneren Drehmoments ($\widehat{M}_{2\_INT}$) der der mit der Belastungswelle (6) verbundenen Drehmasse (2) gebildet wird.

9. Verfahren nach einem der Ansprüche 1 bis 5, **dadurch gekennzeichnet, dass** die Soll-Belastungsmaschinendrehzahl ($N_{B\_soll}$) ermittelt wird, indem das vorgegebene Soll-Prüflingsmoment ($M_{W\_soll}$), zumindest ein simuliertes Verbindungselementmoment ($M_{VW\_sim}$) eines, die drehfeste Verbindung der zumindest zwei Drehmassen (1, 2) abbildenden virtuellen Verbindungselements (VW) und ein schwingendes geschätztes inneres Drehmoment ($\widehat{M}_{2\_INT\_S}$) der mit der Belastungswelle (6) verbundenen Drehmasse (2) vorzeichenrichtig zu einem vierten Differenzmoment ($M'''_{P\_Diff}$) addiert werden und dass das vierte Differenzmoment ($M'''_{P\_Diff}$) mit dem Kehrwert des Massenträgheitsmoments ($J_2$) oder eines simulierten Massenträgheitsmoments ($J_{2\_sim}$) der mit der Belastungswelle (6) verbundenen Drehmasse (2) multipliziert und zeitlich integriert wird, wobei das zumindest eine simulierte Verbindungselementmoment ($M_{VW\_sim}$) aus dem Massenträgheitsmoment ($J_1$) oder einem simulierten Massenträgheitsmoment ($J1_{sim}$) der zumindest einen weiteren Drehmasse (1), aus der rückgeführten Soll-Belastungsmaschinendrehzahl ($N_{B\_soll}$), aus mechanischen Eigenschaften des zumindest einen virtuellen Verbindungselements (VW) und aus einem geschätzten mittleren inneren Drehmoment ($\widehat{M}_{1\_INT\_M}$) der zumindest einen weiteren Drehmasse (1) ermittelt wird, das durch eine gefilterte vorzeichenrichtige Summe des korrigierten inneren effektiven Prüflings-Drehmoments ($M_{P\_int\_korr}$) und des geschätzten inneren Drehmoments ($\widehat{M}_{2\_INT}$) der mit der Belastungswelle (6) verbundenen Drehmasse (2) gebildet wird, wobei das schwingende geschätzte innere Drehmoment ($\widehat{M}_{2\_INT\_S}$) der mit der Belastungswelle (6) verbundenen Drehmasse (2) aus einer vorzeichenrichtigen Summe des korrigierten inneren effektiven Prüflings-Drehmoments ($M_{P\_int\_korr}$) und des geschätzten mittleren inneren Drehmoments $\widehat{M}_{1\_INT\_M}$ der zumindest einen übrigen Drehmasse (1) gebildet wird.

10. Verfahren nach einem der Ansprüche 7 bis 9, **dadurch gekennzeichnet, dass** das zumindest eine simulierte Verbindungselementmoment ($M_{VW\_sim}$) ermittelt wird, indem das zurückgeführte simulierte Verbindungselementmoment ($M_{VW\_sim}$) oder eine vorzeichenrichtige Summe aus dem zurückgeführten simulierten Verbindungselementmoment ($M_{VW\_sim}$) und dem geschätzten inneren Drehmoment $\widehat{M}_{1\_INT}$ oder dem geschätzten mittleren in-

neren Drehmoment $\widehat{M}_{1\_INT\_M}$ der zumindest einen übrigen Drehmasse (1) mit dem Kehrwert des Massenträgheitsmoments ($J_1$) oder eines simulierten Massenträgheitsmoments ($J_{1\_sim}$) der zumindest einen übrigen Drehmasse (1) multipliziert, zeitlich integriert, vorzeichenrichtig mit der zurückgeführten Soll-Belastungsmaschinendrehzahl ($N_{B\_soll}$) summiert und mit den mechanischen Eigenschaften des zumindest einen virtuellen Verbindungselements (VW) multipliziert wird.

11. Verfahren nach Anspruch 7 bis 10, **dadurch gekennzeichnet, dass** als mechanische Eigenschaften des zumindest einen virtuellen Verbindungselements (VW) eine Federsteifigkeit (cvw) und ein Dämpfungskoeffizient (dvw) verwendet werden.

12. Prüfstand (30) mit einem Prüfling (20) und mit zumindest einer Belastungsmaschine (3) zum Antrieb und/oder zur Belastung des Prüflings (20), wobei der Prüfstand (30) dazu eingerichtet ist, auf den Prüfling (20) wirkende Belastungen nachzubilden, wobei der Prüfling (20) zumindest zwei Drehmassen (1, 2) mit jeweils einem Massenträgheitsmoment ($J_1$, $J_2$) aufweist, die mittels eines Verbindungselements (5) drehfest verbunden sind, wobei zumindest eine Drehmasse (1, 2) über eine Belastungswelle (6) mit einer Belastungsmaschine (3) verbunden ist, wobei ein Beobachter (11) zur Schätzung eines inneren Prüflings-Drehmoments ($M_{P\_int}$) vorgesehen ist wobei eine Prüfstandsrecheneinheit (12) zur Ermittlung einer Soll-Belastungsmaschinendrehzahl ($N_{B\_soll}$) vorgesehen ist und wobei der Prüfstand (30) zumindest eine Belastungsmaschinenregeleinheit (9) zur Regelung der zumindest einen Belastungsmaschine (3) aufweist, die vorgesehen ist, die Soll-Belastungsmaschinendrehzahl ($N_{B\_soll}$) einzuregeln, **dadurch gekennzeichnet, dass** der Beobachter (11) dazu eingerichtet ist, ein am Prüfstand (30) ermitteltes, in der zumindest einen Belastungswelle (6) wirkendes Wellenmoment (Mw) mit ermittelten Beschleunigungsmomenten ($M_{B1}$, $M_{B2}$) zur Beschleunigung der zumindest zwei Drehmassen (1, 2) vorzeichenrichtig zu einem korrigierten inneren effektiven Prüflings-Drehmoment ($M_{P\_int\_korr}$) zu summieren **und dass** die Prüfstandsrecheneinheit (12) dazu eingerichtet ist, die Soll-Belastungsmaschinendrehzahl ($N_{B\_soll}$) aus dem korrigierten inneren effektiven Prüflings-Drehmoment ($M_{P\_int\_korr}$) oder einem daraus abgeleiteten Drehmoment (

$$\hat{M}_{1\_INT}, \hat{M}_{1\_INT\_M}, \hat{M}_{2\_INT}, \hat{M}_{2\_INT\_S}$$), einem vorgegebenen Soll-Prüflingsmoment ($M_{W\_soll}$)

und aus den Massenträgheitsmomenten ($J_1$, $J_2$) oder simulierten Massenträgheitsmomenten ($J_{1\_sim}$, $J_{2\_sim}$) der zumindest zwei Drehmassen (1, 2) zu ermitteln.

13. Prüfstand (30) nach Anspruch 12, **dadurch gekennzeichnet, dass** der Beobachter (11) dazu eingerichtet ist, das Beschleunigungsmoment ($M_{B1}$, $M_{B2}$) zumindest einer Drehmasse (1, 2) aus einer Drehzahl ($N_1$, $N_2$) der jeweiligen Drehmasse (1, 2) und aus dem Massenträgheitsmoment ($J_1$, $J_2$) der jeweiligen Drehmasse (1, 2) zu ermitteln und/oder dass am Prüfstand (30) zumindest eine Drehzahlmesseinrichtung zur Messung der Drehzahl ($N_1$, $N_2$) zumindest einer Drehmasse (1, 2) vorgesehen ist, wobei vorzugsweise zumindest ein Filter (F) zum Filtern der gemessenen Drehzahl ($N_1$, $N_2$), einer daraus berechneten Winkelbeschleunigung oder zumindest eines Beschleunigungsmoments (MB1, MB2) vorgesehen ist.

14. Prüfstand (30) nach Anspruch 12 oder 13, **dadurch gekennzeichnet, dass** zumindest eine Drehmasse (1, 2) des Prüflings (20) ein Drehmomenterzeuger ist und dass am Prüfstand (30) eine Prüflingsregeleinheit (21) zur Regelung des zumindest einen Drehmomenterzeugers vorgesehen ist, wobei vorzugsweise als Drehmomenterzeuger ein Verbrennungsmotor vorgesehen ist, wobei die Prüflingsregeleinheit (21) eine Verbrennungsmotor-Regelungseinheit (7) zur Regelung des Verbrennungsmotors aufweist oder dass als Drehmomenterzeuger ein Elektromotor vorgesehen ist, wobei die Prüflingsregeleinheit (21) eine Elektromotor-Regelungseinheit (8) zur Regelung des Elektromotors aufweist.

15. Prüfstand (30) nach einem der Ansprüche 12 bis 14, **dadurch gekennzeichnet, dass** für zwei drehfest verbundene Drehmassen (1, 2) des Prüflings (20) ein Zwei-Massen-Schwungrad vorgesehen ist und/oder dass als Verbindungselement (5) zur drehfesten Verbindung zweier Drehmassen (1, 2) eine Verbindungswelle, ein Riemen oder eine Kette vorgesehen ist und/oder dass am Prüfstand (30) zumindest zwischen zwei Drehmassen (1, 2) zumindest eine Kupplung (4) zum Entkoppeln der zumindest zwei Drehmassen (1, 2) vorgesehen ist und/oder dass die Prüfstandsrecheneinheit (12) dazu eingerichtet ist, die drehfeste Verbindung zweier Drehmassen (1, 2), insbesondere das Verbindungselement (5) durch ein virtuelles Verbindungselement (VW) zu simulieren.

**Claims**

1. Method for operating a test bench (30) with a test object (20) having at least two rotating masses (1, 2) which are connected in a rotationally fixed manner and each have a mass moment of inertia (J1, J2), with at least one rotating mass (1, 2) being connected by means of a loading shaft (6) to a loading machine (3) for driving or loading the test object (20), the loading machine (3) being controlled by a loading machine control unit (9), and with loads being applied to the test object (20) on the test bench (30) and an internal test object torque ($M_{P\_int}$) being estimated and used to determine a target loading machine speed ($N_{B\_soll}$) that is adjusted by the loading machine control unit (9), a shaft torque ($M_W$) acting in the loading shaft (6) being determined for the at least one loading shaft (6), **characterized in that** the determined shaft torque (MW) is added to determined acceleration torques ($M_{B1}$, $M_{B2}$) for accelerating the at least two rotating masses (1, 2), with the correct sign, to form a corrected internal effective test object torque ($M_{P\_int\_korr}$), **and in that** the target loading machine speed ($N_{B\_soll}$) is determined from the corrected internal effective test object torque ($M_{P\_int\_korr}$) or a torque derived therefrom ( $\hat{M}_{1\_INT}$ , $\hat{M}_{1\_INT\_M}$ , $\hat{M}_{2\_INT}$ , $\hat{M}_{2\_INT\_S}$ ), a specified target test object torque ($M_{W\_soll}$) and from the mass moments of inertia ($J_1$, $J_2$) or simulated mass moments of inertia ($J_{1\_sim}$, $J_{2\_sim}$) of the at least two rotating masses (1, 2).

2. Method according to claim 1, **characterized in that** the shaft torque (Mw) acting in at least one loading shaft (6) is measured by means of a torque measuring device on the loading shaft (6) and/or **in that** the acceleration torque ($M_{B1}$, $M_{B2}$) of at least one rotating mass (1, 2) is determined from a speed ($N_1$, $N_2$) of the relevant rotating mass (1, 2) and from the mass moment of inertia ($J_1$, $J_2$) of the relevant rotating mass (1, 2).

3. Method according to claim 2, **characterized in that** the speed ($N_1$, $N_2$) of the at least one rotating mass (1, 2) for which the acceleration torque ($M_{B1}$, $M_{B2}$) is determined is measured by means of a speed measuring device on the test bench (30), wherein preferably the measured speed ($N_1$, $N_2$), an angular acceleration calculated therefrom or at least one acceleration torque (MB1, MB2) is filtered by means of a filter (F).

4. Method according to any of claims 1 to 3, **characterized in that** a torque generator which is controlled by means of a test object control unit (21) is provided as at least one rotating mass (1, 2) of the test object (20), wherein preferably, as the torque generator, an internal combustion engine which is controlled by an internal combustion engine control unit (7) is used or an electric motor which is controlled by an electric motor control unit (8) is provided.

5. Method according to any of claims 1 to 4, **characterized in that** a dual-mass flywheel (ZMS) is used for two rotating masses (1, 2) of the test object (20) connected in a rotationally fixed manner and/or **in that** two rotating masses (1, 2) are connected to a connecting shaft, a belt or a chain in a rotationally fixed manner.

6. Method according to any of claims 1 to 5, **characterized in that** the target loading machine speed ($N_{B\_soll}$) is determined by adding the corrected internal effective test object torque ($M_{P\_int\_korr}$) and the specified target test object torque ($M_{W\_soll}$), with the correct sign, to form a first differential torque ($M_{P\_Diff}$) and **in that** the first differential torque ($M_{P\_Diff}$) is multiplied by the reciprocal of a sum of the mass moments of inertia ($J_1$, $J_2$) or simulated mass moments of inertia ($J_{1\_sim}$, $J_{2\_sim}$) of the at least two rotating masses (1, 2) and integrated over time.

7. Method according to any of claims 1 to 5, **characterized in that** the target loading machine speed ($N_{B\_soll}$) is determined by adding the corrected internal effective test object torque ($M_{P\_int\_korr}$), the specified target test object torque ($M_{W\_soll}$) and at least one simulated connecting element torque ($M_{VW\_sim}$) of a virtual connecting element (VW) that represents the rotationally fixed connection of the at least two rotating masses (1, 2), with the correct sign, to form a second differential torque ($M'_{P\_Diff}$) and **in that** the second differential torque ($M'_{P\_Diff}$) is multiplied by the reciprocal of the mass moment of inertia ($J_2$) or a simulated mass moment of inertia ($J_{2\_sim}$) of the rotating mass (2) connected to the loading shaft (6) and integrated over time, the at least one simulated connecting element torque ($M_{VW\_sim}$) being determined from the mass moment of inertia ($J_1$) or a simulated mass moment of inertia ($J_{1\_sim}$) of the at least one remaining rotating mass (1), from the fed-back target loading machine speed ($N_{B\_soll}$) and mechanical properties of the virtual connecting element (VW).

8. Method according to any of claims 1 to 5, **characterized in that** the target loading machine speed ($N_{B\_soll}$) is determined by adding the specified target test object torque ($M_{W\_soll}$), a simulated connecting element torque ($M_{VW\_sim}$) of a virtual connecting element (VW) that represents the rotationally fixed connection of the at least two rotating masses (1, 2) and an estimated internal torque ( $\widehat{M}_{2\_INT}$ ) of the rotating mass (2) connected to the loading shaft (6), with the correct sign, to form a third differential torque ($M''_{P\_Diff}$) and **in that** the third differential torque ($M''_{P\_Diff}$) is multiplied by the reciprocal of the mass moment of inertia ($J_2$) or a simulated mass moment of inertia ($J_{2\_sim}$) of the rotating mass (2) connected to the loading shaft (6) and integrated over time, the at least one simulated connecting element torque ($M_{VW\_sim}$) being determined from the mass moment of inertia ($J_1$) or a simulated mass moment of inertia ($J_{1\_sim}$) of the at least one further rotating mass (1), from the fed-back target loading machine speed ($N_{B\_soll}$), from mechanical properties of the at least one virtual connecting element (VW) and from an estimated internal torque $\widehat{M}_{1\_INT}$ of the at least one further rotating mass (1) which is formed from a sum, with the correct sign, of the corrected internal effective test object torque ($M_{P\_int\_korr}$) and an estimated internal torque ( $\widehat{M}_{2\_INT}$ ) of the rotating mass (2) connected to the loading shaft (6).

9. Method according to any of claims 1 to 5, **characterized in that** the target loading machine speed ($N_{B\_soll}$) is determined by adding the specified target test object torque ($M_{W\_soll}$), at least one simulated connecting element torque ($M_{VW\_sim}$) of a virtual connecting element (VW) that represents the rotationally fixed connection of the at least two rotating masses (1, 2) and an oscillating estimated internal torque ( $\widehat{M}_{2\_INT\_S}$ ) of the rotating mass (2) connected to the loading shaft (6), with the correct sign, to form a fourth differential torque ($M'''_{P\_Diff}$) and **in that** the fourth differential torque ( $M'''_{P\_Diff}$ ) is multiplied by the reciprocal of the mass moment of inertia ($J_2$) or a simulated mass moment of inertia ($J_{2\_sim}$) of the rotating mass (2) connected to the loading shaft (6) and integrated over time, the at least one simulated connecting element torque ($M_{VW\_sim}$) being determined from the mass moment of inertia ($J_1$) or a simulated mass moment of inertia ($J1_{\_sim}$) of the at least one further rotating mass (1), from the fed-back target loading machine speed ($N_{B\_soll}$), from mechanical properties of the at least one virtual connecting element (VW) and from an estimated average internal torque $\widehat{M}_{1\_INT\_M}$ of the at least one further rotating mass (1) which is formed by a filtered sum, with the correct sign, of the corrected internal effective test object torque ($M_{P\_int\_korr}$) and the estimated internal torque ( $\widehat{M}_{2\_INT}$ ) of the rotating mass (2) connected to the loading shaft (6), the oscillating estimated internal torque ( $\widehat{M}_{2\_INT\_S}$ ) of the rotating mass (2) connected to the loading shaft (6) being formed from a sum, with the correct sign, of the corrected internal effective test object torque ($M_{P\_int\_korr}$) and the estimated average internal torque $\widehat{M}_{1\_INT\_M}$ of the at least one remaining rotating mass (1).

10. Method according to any of claims 7 to 9, **characterized in that** the at least one simulated connecting element torque ($M_{VW\_sim}$) is determined by multiplying the fed-back simulated connecting element torque ($M_{VW\_sim}$) or a sum, with the correct sign, of the fed-back simulated connecting element torque ($M_{VW\_sim}$) and the estimated internal torque $\widehat{M}_{1\_INT}$ or the estimated average internal torque $\widehat{M}_{1\_INT\_M}$ of the at least one remaining rotating mass (1) by the reciprocal of the mass moment of inertia ($J_1$) or a simulated mass moment of inertia ($J_{1\_sim}$) of the at least one remaining rotating mass (1), integrating it over time, adding it, with the correct sign, to the fed-back target loading machine speed ($N_{B\_soll}$) and multiplying it by the mechanical properties of the at least one virtual connecting element (VW).

11. Method according to claim 7 to 10, **characterized in that** a spring stiffness (cvw) and a damping coefficient (dvw) are used as mechanical properties of the at least one virtual connecting element (VW).

12. Test bench (30) with a test object (20) and with at least one loading machine (3) for driving and/or loading the test object (20), the test bench (30) being configured to simulate loads acting on the test object (20), the test object (20) having at least two rotating masses (1, 2) which each have a mass moment of inertia ($J_1$, $J_2$) and are connected in a rotationally fixed manner by means of a connecting element (5), with at least one rotating mass (1, 2) being connected to a loading machine (3) via a loading shaft (6), with an observer (11) being provided for estimating an internal test object torque ($M_{P\_int}$), with a test bench computing unit (12) being provided for determining a target loading machine speed ($N_{B\_oll}$), and the test bench (30) having at least one loading machine control unit (9) for controlling the at least one loading machine (3), which is provided for adjusting the target loading machine speed ($N_{B\_soll}$), **characterized in that** the observer (11) is configured to add a shaft torque (Mw) determined on the test bench (30) and acting in the at least one loading shaft (6) to determined acceleration torques ($M_{B1}$, $M_{B2}$) for accelerating the at least two rotating masses (1, 2), with the correct sign, to form a corrected internal effective test object torque ($M_{P\_int\_korr}$) **and in that** the test bench computing unit (12) is configured to determine the target loading machine speed ($N_{B\_soll}$) from the corrected internal effective test object torque ($M_{P\_int\_korr}$) or a torque derived therefrom ($\hat{M}_{1\_INT}$, $\hat{M}_{1\_INT\_M}$, $\hat{M}_{2\_INT}$, $\widehat{M}_{2\_INT\_S}$), a specified target test object torque ($M_{W\_soll}$) and from the mass moments of inertia ($J_1$, $J_2$) or simulated mass moments of inertia ($J_{1\_sim}$, $J_{2\_sim}$) of the at least two rotating masses (1, 2).

13. Test bench (30) according to claim 12, **characterized in that** the observer (11) is configured to determine the acceleration torque ($M_{B1}$, $M_{B2}$) of at least one rotating mass (1, 2) from a speed ($N_1$, $N_2$) of the relevant rotating mass (1, 2) and from the mass moment of inertia ($J_1$, $J_2$) of the relevant rotating mass (1, 2) and/or **in that** at least one speed measuring device for measuring the speed ($N_1$, $N_2$) of at least one rotating mass (1, 2) is provided on the test bench (30), wherein preferably at least one filter (F) for filtering the measured speed ($N_1$, $N_2$), an angular acceleration calculated therefrom or at least one acceleration torque (MB1, MB2) is provided on the test bench (30).

14. Test bench (30) according to any of claims 12 or 13, **characterized in that** at least one rotating mass (1, 2) of the test object (20) is a torque generator and **in that** a test object control unit (21) for controlling the at least one torque generator is provided on the test bench (30), wherein preferably an internal combustion engine is provided as the torque generator, the test object control unit (21) having an internal combustion engine control unit (7) for controlling the internal combustion engine, or **in that** an electric motor is provided as the torque generator, the test object control unit (21) having an electric motor control unit (8) for controlling the electric motor.

15. Test bench (30) according to any of claims 12 to 14, **characterized in that** a dual-mass flywheel is provided for two rotating masses (1, 2) of the test object (20) connected in a rotationally fixed manner and/or **in that** a connecting shaft, a belt or a chain is provided as the connecting element (5) for the rotationally fixed connection of two rotating masses (1, 2) and/or **in that** at least one clutch (4) is provided on the test bench (30) at least between two rotating masses (1, 2) for decoupling the at least two rotating masses (1, 2) and/or **in that** the test bench computing unit (12) is designed to simulate the rotationally fixed connection of two rotating masses (1, 2), in particular the connecting element (5), by means of a virtual connecting element (VW).

**Revendications**

1. Procédé permettant de faire fonctionner un banc d'essai (30) comportant un objet en essai (20) comportant au moins deux masses rotatives (1, 2), lesquelles sont reliées de manière solidaire en rotation et comportent respectivement un moment d'inertie de masse (J1, J2), dans lequel au moins une masse rotative (1, 2) est reliée à une machine de charge (3) au moyen d'un arbre de charge (6) pour l'entraînement ou la charge de l'objet en essai (20), dans lequel la machine de charge (3) est régulée par une unité de régulation de machine de charge (9), dans lequel des charges sont appliquées sur l'objet en essai (20) sur le banc d'essai (30) et un couple de rotation interne d'objet en essai ($M_{P\_int}$) est estimé, lequel est utilisé pour déterminer une vitesse de rotation de consigne de machine de charge ($N_{B\_soll}$) qui est régulée par l'unité de régulation de machine de charge (9) et dans lequel un couple d'arbre (Mw) agissant dans l'arbre de charge (6) est déterminé pour l'au moins un arbre de charge (6), **caractérisé en ce que** le couple d'arbre (Mw) déterminé est additionné au signe près à des couples d'accélération ($M_{B1}$, $M_{B2}$) déterminés pour l'accélération des au moins deux masses rotatives (1, 2) pour former un couple de rotation d'objet en essai effectif interne corrigé ($M_{P\_int\_korr}$), **et en ce que** la vitesse de rotation de consigne de machine de charge ($N_{B\_soll}$) est déterminée à partir du couple de rotation d'objet en essai effectif interne corrigé ($M_{P\_int\_korr}$) ou d'un couple de rotation ($\hat{M}_{1\_INT}$, $\hat{M}_{1\_INT\_M}$, $\hat{M}_{2\_INT}$, $\hat{M}_{2\_INT\_S}$) dérivé de celui-ci, d'un couple de consigne d'objet en essai ($M_{W\_soll}$) prédéfini et à partir des moments d'inertie de masse ($J_1$, $J_2$) ou de moments d'inertie de masse simulés ($J_{1\_sim}$, $J_{2\_sim}$) des au moins deux masses rotatives (1, 2).

2. Procédé selon la revendication 1, **caractérisé en ce que** le couple d'arbre (Mw) agissant dans au moins un arbre de charge (6) est mesuré au moyen d'un dispositif de mesure de couple de rotation sur l'arbre de charge (6) **et/ou en ce que** le couple d'accélération ($M_{B1}$, $M_{B2}$) d'au moins une masse rotative (1, 2) est déterminé à partir d'une vitesse de rotation ($N_1$, $N_2$) de la masse rotative (1, 2) respective et à partir du moment d'inertie de masse ($J_1$, $J_2$) de la masse rotative (1, 2) respective.

3. Procédé selon la revendication 2, **caractérisé en ce que** la vitesse de rotation ($N_1$, $N_2$) de l'au moins une masse rotative (1, 2), pour laquelle le couple d'accélération ($M_{B1}$, $M_{B2}$) est déterminé, est mesurée au moyen d'un dispositif de mesure de vitesse de rotation sur le banc d'essai (30), dans lequel, de préférence, la vitesse de rotation ($N_1$, $N_2$) mesurée, une accélération angulaire calculée à partir de celle-ci ou au moins un couple d'accélération (MB1, MB2) est filtré au moyen d'un filtre (F).

4. Procédé selon l'une des revendications 1 à 3, **caractérisé en ce qu'**un générateur de couple de rotation est prévu comme au moins une masse rotative (1, 2) de l'objet en essai (20), lequel générateur est régulé au moyen d'une unité de régulation d'objet en essai (21), dans lequel, de préférence, un moteur à combustion interne est utilisé comme générateur de couple de rotation, lequel est régulé par une unité de régulation de moteur à combustion interne (7) ou un moteur électrique est prévu, lequel est régulé par une unité de régulation de moteur électrique (8).

5. Procédé selon l'une des revendications 1 à 4, **caractérisé en ce qu'**un volant d'inertie à deux masses (ZMS) est utilisé pour deux masses rotatives (1, 2) de l'objet en essai (20) reliées de manière solidaire en rotation, **et/ou en ce que** deux masses rotatives (1, 2) sont reliées de manière solidaire en rotation par un arbre de liaison, une courroie ou une chaîne.

6. Procédé selon l'une des revendications 1 à 5, **caractérisé en ce que** la vitesse de rotation de consigne de machine de charge ($N_{B\_soll}$) est déterminée en additionnant au signe près le couple de rotation d'objet en essai effectif interne corrigé ($M_{P\_int\_korr}$) et le couple de consigne d'objet en essai ($M_{W\_soll}$) prédéfini pour obtenir un premier couple différentiel ($M_{P\text{-Diff}}$), **et en ce que** le premier couple différentiel ($M_{P\_Diff}$) est multiplié par la valeur inverse d'une somme des moments d'inertie de masse ($J_1$, $J_2$) ou des moments d'inertie de masse simulés ($J_{1\_sim}$, $J_{2\_sim}$) des au moins deux masses rotatives (1, 2) et est intégré dans le temps.

7. Procédé selon l'une des revendications 1 à 5, **caractérisé en ce que** la vitesse de rotation de consigne de machine de charge ($N_{B\_soll}$) est déterminée en additionnant au signe près le couple de rotation d'objet en essai effectif interne corrigé ($M_{P\_int\_korr}$), le couple de consigne d'objet en essai ($M_{W\_soll}$) prédéfini et au moins un couple simulé d'élément de liaison ($M_{VW\_sim}$) d'un élément de liaison virtuel (VW) représentant la liaison de manière solidaire en rotation des au moins deux masses rotatives (1, 2) pour former un deuxième couple différentiel ($M'_{P\_Diff}$), **et en ce que** le deuxième couple différentiel ($M'_{P\_Diff}$) est multiplié par la valeur inverse du moment d'inertie de masse ($J_2$) ou d'un moment d'inertie de masse simulé ($J_{2\_sim}$) de la masse rotative (2) reliée à l'arbre de charge (6) et est intégré dans le temps, dans lequel l'au moins un couple simulé d'élément de liaison ($M_{VW\_sim}$) est déterminé à partir du moment d'inertie de masse ($J_1$) ou d'un moment d'inertie de masse simulé ($J_{1\_sim}$) de l'au moins une masse rotative (1) restante, à partir de la vitesse de rotation de consigne de machine de charge ($N_{B\_soll}$) renvoyée et de propriétés mécaniques de l'élément de liaison virtuel (VW).

8. Procédé selon l'une des revendications 1 à 5, **caractérisé en ce que** la vitesse de rotation de consigne de machine de charge ($N_{B\_soll}$) est déterminée en additionnant au signe près le couple de consigne d'objet en essai ($M_{W\_soll}$) prédéfini, un couple simulé d'élément de liaison ($M_{VW\_sim}$) d'un élément de liaison virtuel (VW) représentant la liaison de manière solidaire en rotation des au moins deux masses rotatives (1, 2), et un couple de rotation interne estimé ($\hat{M}_{2\_INT}$) de la masse rotative (2) reliée à l'arbre de charge (6) pour former un troisième couple différentiel ($M''_{P\_Diff}$), **et en ce que** le troisième couple différentiel ($M''_{P\_Diff}$) est multiplié par la valeur inverse du moment d'inertie de masse ($J_2$) ou d'un moment d'inertie de masse simulé ($J_{2\_sim}$) de la masse rotative (2) reliée à l'arbre de charge (6) et est intégré dans le temps, dans lequel l'au moins un couple simulé d'élément de liaison ($M_{VW\_sim}$) est calculé à partir du moment d'inertie de masse ($J_1$) ou d'un moment d'inertie de masse simulé ($J_{1\_sim}$) de l'au moins une autre masse rotative (1), à partir de la vitesse de rotation de consigne de machine de charge ($N_{B\_soll}$) renvoyée, à partir de propriétés mécaniques de l'au moins un élément de liaison virtuel (VW) et à partir d'un couple de rotation interne estimé ($\hat{M}_{1\_INT}$) de l'au moins une autre masse rotative (1) qui est formé à partir d'une somme au signe près du couple de rotation d'objet en essai effectif interne corrigé ($M_{P\_int\_korr}$) et d'un couple de rotation interne estimé ($\hat{M}_{2\_INT}$) de la masse rotative (2) reliée à l'arbre de charge (6).

9. Procédé selon l'une des revendications 1 à 5, **caractérisé en ce que** la vitesse de rotation de consigne de machine de charge ($N_{B\_soll}$) est déterminée en additionnant au signe près le couple de consigne d'objet en essai ($M_{W\_soll}$) prédéfini, au moins un couple simulé d'élément de liaison ($M_{VW\_sim}$) d'un élément de liaison virtuel (VW) représentant la liaison de manière solidaire en rotation des au moins deux masses rotatives (1, 2), et un couple de rotation interne estimé oscillant ($\hat{M}_{2\_INT\_S}$) de la masse rotative (2) reliée à l'arbre de charge (6) pour former un quatrième couple différentiel (M‴$_{P\_Diff}$), **et en ce que** le quatrième couple différentiel (M‴$_{P\_Diff}$) est multiplié par la valeur inverse du moment d'inertie de masse (J$_2$) ou d'un moment d'inertie de masse simulé (J$_{2\_sim}$) de la masse rotative (2) reliée à l'arbre de charge (6) et est intégré dans le temps, dans lequel l'au moins un couple simulé d'élément de liaison (M$_{VW\_sim}$) est déterminé à partir du moment d'inertie de masse (J$_1$) ou d'un moment d'inertie de masse simulé (J$_{1\_sim}$) de l'au moins une autre masse rotative (1), à partir de la vitesse de rotation de consigne de machine de charge (N$_{B\_soll}$) renvoyée, à partir de propriétés mécaniques de l'au moins un élément de liaison virtuel (VW) et à partir d'un couple de rotation interne moyen estimé ($\hat{M}_{1\_INT\_M}$) de l'au moins une autre masse rotative (1) qui est formé par une somme filtrée, au signe près, du couple de rotation d'objet en essai effectif interne corrigé (M$_{P\_int\text{-}korr}$) et du couple de rotation interne estimé ($\hat{M}_{2\_INT}$) de la masse rotative (2) reliée à l'arbre de charge (6), dans lequel le couple de rotation interne estimé oscillant ($\hat{M}_{2\_INT\_S}$) de la masse rotative (2) reliée à l'arbre de charge (6) est formé à partir d'une somme au signe près du couple de rotation d'objet en essai effectif interne corrigé (M$_{P\_int\_korr}$) et du couple de rotation interne moyen estimé ($\hat{M}_{1\_INT\_M}$) de l'au moins une masse rotative (1) restante.

10. Procédé selon l'une des revendications 7 à 9, **caractérisé en ce que** l'au moins un couple simulé d'élément de liaison (M$_{VW\_sim}$) est déterminé en multipliant le couple simulé d'élément de liaison (M$_{VW\_sim}$) renvoyé ou une somme au signe près du couple simulé d'élément de liaison (Mvw_sim) renvoyé et du couple de rotation interne estimé ($\hat{M}_{1\_INT}$) ou du couple de rotation interne moyen estimé ($\hat{M}_{1\_INT\_M}$) de l'au moins une masse rotative (1) restante et de la valeur inverse du moment d'inertie de masse (J$_1$) ou d'un moment d'inertie de masse simulé (J$_{1\_sim}$) de l'au moins une masse rotative (1) restante, est intégré dans le temps, additionné au signe près à la vitesse de rotation de consigne de machine de charge (N$_{B\_soll}$) renvoyée et multiplié par les propriétés mécaniques de l'au moins un élément de liaison virtuel (VW).

11. Procédé selon les revendications 7 à 10, **caractérisé en ce qu'**une rigidité élastique (cvw) et un coefficient d'amortissement (dvw) sont utilisés comme propriétés mécaniques de l'au moins un élément de liaison virtuel (VW).

12. Banc d'essai (30) comportant un objet en essai (20) et comportant au moins une machine de charge (3) pour l'entraînement et/ou la charge de l'objet en essai (20), dans lequel le banc d'essai (30) est conçu pour reproduire des charges agissant sur l'objet en essai (20), dans lequel l'objet en essai (20) présente au moins deux masses rotatives (1, 2) comportant respectivement un moment d'inertie de masse (J$_1$, J$_2$) et reliées de manière solidaire en rotation au moyen d'un élément de liaison (5), dans lequel au moins une masse rotative (1, 2) est reliée à une machine de charge (3) par l'intermédiaire d'un arbre de charge (6), dans lequel un observateur (11) est prévu pour estimer un couple de rotation interne d'objet en essai (M$_{P\_int}$), dans lequel une unité de calcul de banc d'essai (12) est prévue pour déterminer une vitesse de rotation de consigne de machine de charge (N$_{B\_soll}$) et dans lequel le banc d'essai (30) présente au moins une unité de régulation de machine de charge (9) pour la régulation de l'au moins une machine de charge (3), laquelle unité est prévue pour réguler la vitesse de rotation de consigne de machine de charge (N$_{B\_soll}$), **caractérisé en ce que** l'observateur (11) est configuré pour additionner au signe près un couple d'arbre (Mw) déterminé sur le banc d'essai (30) et agissant dans l'au moins un arbre de charge (6) à des couples d'accélération (M$_{B1}$, M$_{B2}$) déterminés pour l'accélération des au moins deux masses rotatives (1, 2) afin d'obtenir un couple de rotation d'objet en essai effectif interne corrigé (M$_{P\_int\_korr}$), **et en ce que** l'unité de calcul de banc d'essai (12) est configurée pour déterminer la vitesse de rotation de consigne de machine de charge (N$_{B\_soll}$) à partir du couple de rotation d'objet en essai effectif interne corrigé (M$_{P\_int\_korr}$) ou d'un couple de rotation ($\hat{M}_{1\_INT}$, $\hat{M}_{1\_INT\_M}$, $\hat{M}_{2\_INT}$, $\hat{M}_{2\_INT\_S}$) dérivé de celui-ci, d'un couple de consigne d'objet en essai (M$_{W\_soll}$) prédéfini, et à partir des moments d'inertie de masse (J$_1$, J$_2$) ou de moments d'inertie de masse simulés (J$_{1\_sim}$, J$_{2\_sim}$) des au moins deux masses rotatives (1, 2).

13. Banc d'essai (30) selon la revendication 12, **caractérisé en ce que** l'observateur (11) est configuré pour déterminer le couple d'accélération (M$_{B1}$, M$_{B2}$) d'au moins une masse rotative (1, 2) à partir d'une vitesse de rotation (N$_1$, N$_2$) de la masse rotative (1, 2) respective et à partir du moment d'inertie de masse (J$_1$, J$_2$) de la masse rotative (1, 2) respective, **et/ou en ce qu'**au moins un dispositif de mesure de vitesse de rotation est prévu sur le banc d'essai (30) pour la mesure de la vitesse de rotation (N$_1$, N$_2$) d'au moins une masse rotative (1, 2), dans lequel, de préférence, au moins un filtre (F) est prévu pour filtrer la vitesse de rotation (N$_1$, N$_2$) mesurée, une accélération angulaire calculée à partir de celle-ci ou au moins un couple d'accélération (MB1, MB2).

14. Banc d'essai (30) selon la revendication 12 ou 13, **caractérisé en ce qu'**au moins une masse rotative (1, 2) de l'objet en essai (20) est un générateur de couple de rotation **et en ce qu'**une unité de régulation d'objet en essai (21) est prévue sur le banc d'essai (30) pour réguler l'au moins un générateur de couple de rotation, dans lequel, de préférence, un moteur à combustion interne est prévu comme générateur de couple de rotation, dans lequel l'unité de régulation d'objet en essai (21) présente une unité de régulation de moteur à combustion interne (7) pour la régulation du moteur à combustion interne, **ou en ce qu'**un moteur électrique est prévu comme générateur de couple de rotation, dans lequel l'unité de régulation d'objet en essai (21) présente une unité de régulation de moteur électrique (8) pour la régulation du moteur électrique.

15. Banc d'essai (30) selon l'une des revendications 12 à 14,
**caractérisé en ce qu'**un volant d'inertie à deux masses est prévu pour deux masses rotatives (1, 2) de l'objet en essai (20) reliées de manière solidaire en rotation, **et/ou en ce qu'**un arbre de liaison, une courroie ou une chaîne est prévu comme élément de liaison (5) pour la liaison de manière solidaire en rotation de deux masses rotatives (1, 2), **et/ou en ce qu'**au moins un accouplement (4) permettant de désolidariser les au moins deux masses rotatives (1, 2) est prévu sur le banc d'essai (30) au moins entre deux masses rotatives (1, 2), **et/ou en ce que** l'unité de calcul de banc d'essai (12) est configurée pour simuler la liaison de manière solidaire en rotation de deux masses rotatives (1, 2), en particulier l'élément de liaison (5), à l'aide d'un élément de liaison virtuel (VW).

EP 4 014 021 B1

Fig. 1

Fig. 2

Fig. 3

Fig. 4

Fig. 4a

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- WO 2018185286 A1